# EUROPEAN PATENT APPLICATION

(11) **EP 4 707 775 A2**
(43) Date of publication of application: **11.03.2026**
(21) Application number: 25222142.9
(22) Date of filing: 07.09.2023
(51) Int. Cl.: G01N 15/02

(54) **INSPECTION SYSTEM AND METHOD FOR A CLOSED MEDICAL CONTAINER**

(30) Priority: 09.09.2022 EP 22194838
(62) Divisional of application: 23767887.5
(71) Applicant: F. Hoffmann-La Roche AG, 4070 Basel (CH)
(72) Inventor: AMARA, Ilias, 4070 Basel (CH); AßFALG, Anacelia, 4070 Basel (CH); AUF DER MAUR, Fabian, 6055 Alpnach (CH); CLEMENS-HEMMELMANN, Mirjam, 4070 Basel (CH); GERMERSHAUS, Oliver, 4132 Muttenz (CH); KIRSCHMANN, Moritz Alexander, 6055 Alpnach (CH); LENTES, Christopher Johannes, 4070 Basel (CH); STEINER, Roger, 4070 Basel (CH)
(74) Representative: Latscha Schöllhorn Partner AG

(57) **Abstract**

An inspection system (1.3) is operative to inspect a medical container containing a liquid. The inspection system (1.3) comprises a sample holder (1.4) operative to hold the closed medical container, a light source operative to output a Raman probe beam incident onto the closed medical container, and a detector operative to detect a Raman spectrum responsive to outputting the Raman probe beam. Acquired data are analyzed to detect and/or determine characteristics of a particle in the medical container.

## Description

### Technical Field

The present invention relates to an inspection system and method for inspecting a medical container. The present invention relates to such an inspection system and method that is operative to detect and/or characterize particulate matter in a closed medical container that has a liquid contained therein. The present invention relates to such an inspection system and method that can be operative to detect, characterize, and/or identify chemically particulate matter in a closed medical container using optical techniques, such as visual and/or spectroscopic techniques.

The inspection system and method can be used for detecting and/or characterizing visible particles. The inspection system and method can be used for determining in an automated manner whether a closed medical container includes particulate matter that causes it to fail industry quality standards. The inspection system and method can also be used for identifying potential reasons for the presence of particulate matter, rendering it suitable for use in process control.

The present invention can be used in association with a wide variety of medical containers, such as vials or syringes. One and the same inspection system may be operative such that it can inspect medical containers of different types, shapes, dimensions, and/or different materials (such as glass, polymer, etc.).

### Background Art

A wide variety of medical formulations are provided in medical containers such as vials, syringes, etc. Parenteral drugs are an example.

Due to the potential impact of particulate matter on patients, regulatory authorities require information on the presence of particles, and evidence of the limitation, control and identification of any product-related impurities. Drug products for parenteral administration must be essentially free from visible particles (see, e.g., U. S. Pharmacopeia chapter <1>).

To satisfy this expectation, techniques for control and monitoring of visible particle matter are used. Inspection may be performed as manual visual inspection (inspection with the naked eye under controlled conditions), as semi-automated visual inspection (which may use additional systems that provide container handling for the inspector), or automated visual inspection. The latter uses automated machines to detect the presence of visible particles any may apply, e.g., a diode array sensor or a CCD camera.

In various cases, it is desired or necessary to not only detect the presence of a particle but to further characterize it. One example is the formulation development phase where particle characterization and identification is performed in a systematic way. Research on mechanistic formation and kinetics of inherent particles are conducted through stability studies to determine product specific profile over the shelf life. This profile, giving the expected characteristics and the changes that may occur over time, should be described in the product submission documentation. As a further example, in recent years, the pharmaceutical industry has been faced with new challenges regarding the increasing presence of inherent (proteinaceous aggregate or free fatty acid) particles at release or during storage of final drug product. A revision of the European Pharmacopeia monograph 2031 "Monoclonal Antibodies for Human Use" has been made to reflect this situation and the terms: "without visible particles, unless otherwise justified and authorized" were included into the requirement for tests and appearance. This means that a container contains inherent visible particles that are similar to those observed and documented during the development phase would still be considered as "essentially free of visible particle".

WO 2020/131666 A1 discloses a system for detecting a particle in a container. The system is configured such that the container is rotated during the process of using optical componentry for particle detection.

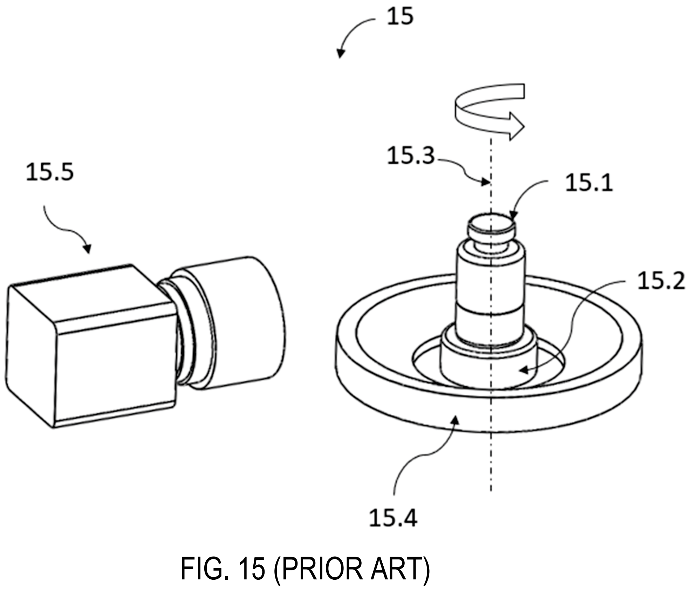

Figure 15 is a schematic view of a conventional system for detecting a particle in a container in which the container is rotated. A container 15.1 filled with a liquid drug product is positioned and held by a motorized sample holder 15.2 which is rotated around an axis of rotation 15.3. A light ring 15.4 is placed under the sample holder and centered so the light emitted from it concurrently illuminates the entire container. A video camera 15.5, usually orthogonally orientated to the container, is used to acquire a video of moving particles in the container while the container is rotating.

Various challenges are associated with conventional setups in which the container is rotated during image acquisition. As shown in Figure 15, conventional automated visual inspection systems are equipped with a spinning unit to set the particles in motion to make them detectable by processing a series of video frames. However, the rotation of the container is a cause of air bubble formation, which is one of the well-known source of false positive detection. Furthermore, some biological products can be sensitive to agitation and require careful handling of the container, while others tend to generate a foam on the surface that complicates the sample visualization. In addition, the rapid movement of the particles in the fluid is an obstacle to a precise localization of the particles (such as three-dimensional (3D) localization), which could be useful for further analysis.

If a further characterization of detected particles is performed, this may bring about further challenges. US 2020/0241002 A1 discloses a system that uses Raman techniques for analyzing a particle. For performing the analysis, the container must be opened and the particle must be isolated using a filter.

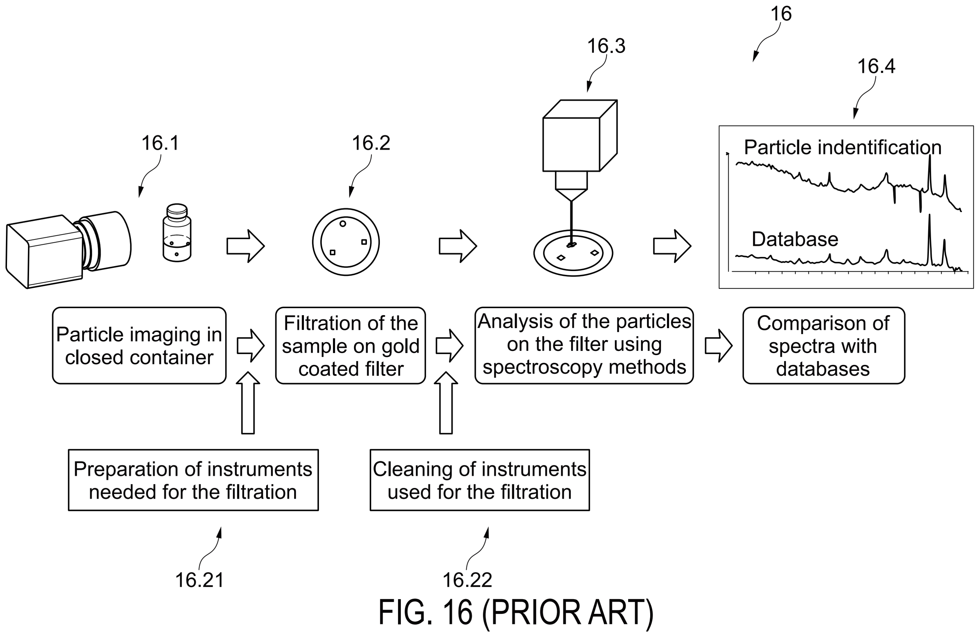

Figure 16 provides an overview of the several steps in the chemical identification process of visible particles. The process begins with a step 16.1 of imaging the particles present in the closed container followed by a step 16.2 of filtration of the sample on a gold-coated filter to collect the particles. The next step is the transfer of the gold filter on the motorized sample stage of a Fourier-transform infrared spectroscopy (FTIR) or Raman micro-spectroscope to perform chemical identification of particles (steps 16.3 and 16.4). These instruments combine the visualization capabilities of a standard microscope with the analytical features of a spectrometer for compositional analysis. The filter view allows the detection and localization of all isolated particles in a manual or even automated way using image-processing algorithms. The position of the sample stage is controlled by several motorized mechanical axes to bring particles one after the other into the focal point of the microscope set-up. The correct positioning of the particles allows the step 16.3 in which acquisition of FTIR or Raman spectra of each individual particle (spectral fingerprinting process) is performed. Chemical identification is then possible by processing, at step 16.4, the FTIR or Raman spectrum of the test sample with the FTIR or Raman spectra in a database of known compounds using matching algorithms.

In the process explained with reference to Figure 16, it is necessary to prepare and clean all required instruments (step 16.21) to make sure that no additional contaminant will be found on the gold-filter. This similarly applies to a post-filtration process, where care needs to be taken for cleaning and storage of the instruments (step 16.22). These two steps 16.21 and 16.22 are parallel to the chemical identification process. They do not add value to the data collection, are time consuming but are necessary to ensure sample integrity and reliability of the data. A conventional chemical identification process as described with reference to Figure 16 is destructive and requires a lot of time and resource due to the filtration step (step 16.2).

Therefore, there is a need for a system and a method allowing particles to be detected, characterized and/or chemically analyzed in a closed medical container, using a process that mitigates at least some of the shortcomings of conventional techniques mentioned above. For illustration, there is a need for a system and a method that allows particles to be detected, characterized, and/or chemically identified in a closed medical container using optical techniques, e.g. visualization and/or spectroscopy techniques, in an efficient and reliable manner.

### Disclosure of the Invention

According to the invention this need is settled by systems and by methods as defined by the features of the independent claims. Preferred embodiments are subject of the dependent claims.

In one aspect, the invention is an inspection system operative or configured to inspect a medical container containing a liquid, the inspection system comprising: a sample holder operative or configured to hold the medical container along an axis; at least one optical system comprising at least one light source operative or configured to output light incident onto the medical container and at least one detector operative or configured to detect return light from the medical container; an evaluation system coupled to the at least one optical detector and operative or configured to detect and/or determine characteristics of a particle in the medical container based at least on an output of the at least one detector; and at least one actuator operative or configured to move the at least one light source and/or the at least one detector around the axis while the sample holder holds the medical container in a rotationally and translationally fixed manner.

The inspection system according to the invention is operative or configured to reliably detect particulate manner efficiently and reliably. The risk of false positives is not increased by rotation of the container, which would result in increased bubble formation. By moving a light source and/or detector of the optical system around the axis, all of the container can be analyzed. The capability of localizing particles, e.g. of performing three-dimensional (3D) particle localization, is increased.

The at least one actuator may be operative or configured to move the at least one light source and the at least one detector along a path that is curved around the axis. This facilitates applying optical techniques to the full container volume using a simple mechanical configuration, such as a configuration having a rotating element to displace the at least one light source and the at least one detector.

One, several, or all of the following applies or apply: at least a segment of the path extends in a plane perpendicular to the axis; the path may comprise an elliptical arc; the path may comprise a circular arc; the at least one actuator may be operative or configured to concurrently change a position and an orientation of the at least one light source to keep the illumination light incident onto the medical container and/or the axis; the at least one actuator may be operative or configured to concurrently change a position and an orientation of the at least one detector to cause the return light to be incident onto the at least one detector. These techniques facilitate applying optical techniques to the full container volume using a simple mechanical configuration, such as a configuration having a rotating element to displace the at least one light source and the at least one detector.

The inspection system may comprise a frame on which the at least one optical system is supported, wherein the sample holder is arranged in a fixed location relative to the frame. The at least one actuator may be operative or configured to move the at least one light source and/or the at least one detector relative to the frame. By keeping the sample holder stationary during optical analysis by the at least one optical system, the risk of bubble formation and/or damage to sensitive container content is reduced. By moving the light source and/or detector relative to the frame, the optical system(s) are positionable relative to the stationary container during optical analysis.

The at least one light source comprises a first light source operative or configured to output a light sheet. This allows container volume to be analyzed in an efficient manner, along a plane intersecting the container volume.

The at least one actuator may comprise a first actuator operative or configured to move the first light source and/or a first detector around the axis. The first actuator may be a rotary actuator. This allows container volume to be analyzed in an efficient manner and using a simple construction, such as a by rotating the first light source and/or first detector around the axis while the first light source outputs the light sheet incident onto the medical container and images are being captured by the first detector.

The first detector may have a first detector axis that is arranged at a first angle relative to a center axis of a light sheet output by the first light source. The first angle may be greater than 0° and less than 180°. The first detector may be arranged in an oblique configuration relative to the light sheet, so as to observe the light sheet as it passed through the medical container.

The first actuator may be operative or configured to move the first light source around the axis such that the light sheet remains incident upon the axis as the first light source is moved around the axis. This configuration facilitates an analysis in view of possible optical effects that may be introduced by a cylindrical wall of the medical container.

The at least one detector comprises a first detector comprising an opto-electrical transducer having a plurality of pixels. The first detector may be operative or configured to provide a first detector output responsive to the return light during illumination of the medical container with the light sheet. This configuration allows visible particles to be detected when they are located within the light sheet, using images taken by the first detector for several angular positions of the first light source and first detector around the axis.

The first detector comprises a tilt objective. The first detector may comprise a Scheimpflug camera. This configuration facilitates an analysis that can accommodate possible optical effects that may be introduced by a cylindrical wall of the medical container.

The evaluation system may be operative or configured to detect, based at least on the first detector output, the particle when the particle is located in the light sheet. Thus, the inspection system may be operative or configured to take at least a binary output indicating whether the particle is present in the container or not. Such a determination is useful inter alia for inspection in an ongoing mass manufacturing process.

Alternatively or additionally, the evaluation system may be operative determine, based at least on the first detector output, that the particle is located in an interior of the medical container. Thus, the inspection system may be operative or configured to discriminate particles within the container from particles on an exterior of the container and/or within the container wall. Such a discrimination is useful inter alia for inspection in an ongoing mass manufacturing process.

Alternatively or additionally, the evaluation system may be operative discriminate, based at least on the first detector output, the particle from a bubble in a liquid within the medical container. Thus, the inspection system may be operative or configured to discriminate a particle from a bubble. Such a discrimination is useful inter alia for preventing false positives in particle detection.

Alternatively or additionally, the evaluation system may be operative discriminate, based at least on the first detector output, the particle from an impurity within a container wall of the medical container. Thus, the inspection system may be operative or configured to discriminate particles within the container from particles within the container wall. Such a discrimination is useful inter alia for preventing false positives in particle detection.

Alternatively or additionally, the evaluation system may be operative determine, based at least on the first detector output for several different angular positions of the first light source and/or the first detector around the axis, information on a morphology of the particle, optionally a three-dimensional surface shape of the particle. Thus, the inspection system may be operative or configured to determine geometrical characteristics of the particle. Such a determination is useful inter alia for determining possible root causes for impurities.

Alternatively or additionally, the evaluation system may be operative determine, based at least on the first detector output, information on a size of the particle, optionally a three-dimensional size of the particle. Thus, the inspection system may be operative or configured to determine geometrical characteristics of the particle. Such a determination is useful inter alia for determining possible root causes for impurities.

The at least one light source may comprise a second light source operative or configured to output a Raman probe beam. The at least one detector may comprise a second detector coupled to a Raman spectrometer. Thus, the inspection system may be set up for determining spectral characteristics indicative of chemical properties of the particle. The Raman spectrum is captured on a medical container, allowing the chemical characteristics to be determined in an efficient manner and in a manner that does not preclude the medical container from being used in case the chemical characteristics indicate the particle to be an acceptable particle.

The at least one actuator may comprise a second actuator operative or configured to move both the second light source and the second detector. This facilitates the light source and detector of a Raman spectroscopy system to be positioned relative to the container, making it easier to specifically target particles that have previously been localized in the container.

The second actuator may have more degrees of freedom than the first actuator. The first actuator may have one degree of freedom (e.g., one rotary degree of freedom). The second actuator may have at least two degrees of freedom. The second actuator may comprise a multi-axis robotic arm or a multi-axis linear displacement actuator. Such configurations allow the Raman spectroscopy to be targeted on particles that have previously been localized in the container.

The inspection system may comprise a control device operative or configured to control the second actuator based at least on the first detector output. Such a configuration allows the first light source and first detector to be used for 3D localization of particles, which are subsequently investigated further using Raman spectroscopy without having to open the medical container.

The evaluation system may be operative or configured to determine chemical characteristics of the particle based at least on a second detector output provided by the second detector or a Raman spectrum provided by the Raman spectrometer. Thus, the inspection system may be set up for determining spectral characteristics indicative of chemical properties of the particle. The Raman spectrum is captured on a medical container, allowing the chemical characteristics to be determined in an efficient manner and in a manner that does not preclude the medical container from being used in case the chemical characteristics indicate the particle to be an acceptable particle.

The inspection system may be adjustable for detecting and/or determining characteristics of particles in containers of different types (such as vials and syringes) and/or sizes (such as different container volumes, container lengths measured along the axis, and/or container diameters measured perpendicular to the axis). The inspection system may comprise at least one adjustment mechanism for accommodating containers of different types and/or sizes. The at least one adjustment mechanism may comprise one, several, or all of: a mechanism for adjusting a diameter of a receptacle of the sample holder; a sample holder displacement mechanism for adjusting a location at which the container is held by the sample holder along the axis; an optics system displacement mechanism for adjusting a position of the optics system along the axis and/or perpendicular to the axis (e.g., to accommodate different refraction that results from different container diameters). Thereby, the inspection system is amenable to operating in association with different container types and/or sizes, without requiring a re-calibration for every different container type and/or size.

The inspection system may be operative for inspecting medical container selected from a group comprising or consisting of vials and syringes. The medical container may have a translucent, in particular transparent circumferential wall. The circumferential wall may extend in a cylindrical manner around the axis for at least part of, and typically most of, the container length.

There is also disclosed a system comprising the inspection system and the medical container.

The evaluation system may be operative or configured to provide an output, based at least on the output of the at least one detector. The inspection system may comprise an interface (such as a human machine interface (HMI), e.g. a graphical user interface (GUI)) for outputting information on the presence, geometrical characteristics, and/or chemical characteristics of the particle, based at least on the output of the at least one detector. Alternatively or additionally, the inspection system may comprise an interface for outputting a control signal operative or configured to control at least one component of a manufacturing system for manufacturing the medical containers. Alternatively or additionally, the inspection system may comprise an interface for outputting a control signal operative or configured to cause the medical container to be discarded selectively depending on whether the evaluation system has identified the particle to be present in an interior of the container and has identified the particle to have size and/or chemical characteristics which cause the medical container to be non-acceptable.

The inspection system may be an automatic inspection system. The inspection system may take a decision on acceptability of a medical container with respect to visible particles without human intervention.

The inspection system may comprise a loading-unloading mechanism operative or configured to provide the medical container to the sample holder for performing the analysis and to remove the medical container from the sample holder after the at least one detector has detected all required signals.

The inspection system may comprise several optical systems operable for identifying and/or characterizing particles. The inspection system may be operative such that the several optical systems are operated sequentially. For illustration, a first optical system may be operative as an imaging system which captures images of the medical container. The first optical system may include a source for a light sheet and a camera chip. The camera chip may detect images in response to illumination of the medical container with a light sheet while a first actuator rotates the first optical system, i.e. both the source for the light sheet and the detector with the camera chip, around the axis. 3D locations of particles in an interior of the container (i.e., within a cavity defined in the interior of the container that also contains liquid) may be determined thereby. A Raman spectroscopy system may be operated subsequently to specifically obtain Raman spectra of the particles that have been previously localized. A second actuator (which may be operative or configured to adjust a Raman probe and/or detector along at least two directions), optionally in combination with the first actuator, may be operated responsive to the 3D locations of the particles.

In one aspect, the invention is an inspection system operative or configured to inspect a closed medical container containing a liquid, the inspection system comprising: a sample holder operative or configured to hold the closed medical container; a light source operative or configured to output a Raman probe beam incident onto the closed medical container; a detector operative or configured to detect a Raman spectrum responsive to outputting the Raman probe beam; and an evaluation system coupled to the detector and operative or configured to determine characteristics of a particle in the closed medical container based at least on the Raman spectrum.

The inspection system of this aspect of the invention allows a chemical analysis to be performed on any particle(s) localized within an interior of the container that also contains the liquid, while maintaining the medical container in a closed state. The chemical characteristics can be determined efficiently and without compromising integrity of the container. This is particularly useful when using the chemical characterization during mass production, where a medical container is to be discarded selectively only if the chemical analysis as obtained from the Raman spectrum shows that there is at least one non-acceptable particle within the container.

The inspection system may comprise an actuator arrangement having at least two, e.g., three or more, degrees of freedom. This allows the Raman light source and/or detector to be positioned relative to the sample so as to perform measurements on localized particles.

The actuator arrangement may comprise a 3-axis robotic arm. The actuator arrangement may comprise a first actuator operative or configured to rotate a support on which the Raman light source and detector are mounted. The actuator arrangement may comprise a second actuator operative or configured to displace the Raman light source and/or detector relative to the support along at least two axes. This allows the Raman light source and/or detector to be positioned relative to the sample so as to perform measurements on localized particles.

The sample holder may position the container so that it is immobile while the Raman spectrum is measured. The measurement is facilitated thereby, because the particle(s) can be targeted more readily in the immobile container in which there are no spinning forces that may be prone to shifting particles prior to obtaining the Raman spectrum.

The inspection system may comprise an optical imaging system operative or configured to localize particles in an interior of the closed medical container that also contains the liquid. The optical imaging system may comprise a tilted objective. The optical imaging system, Raman light source, and/or Raman detector may be integrated within an enclosure of a probe device.

Additional optional features of the inspection system of this aspect of the invention, and the effects attained thereby, correspond to optional features discussed in association with the inspection system of the first aspect of the invention above.

According to an embodiment of the invention, there is provided manufacturing system, comprising a filling device operative or configured to fill at least one liquid into a medical container; a closure device operative or configured to close the medical container with the at least one liquid contained therein; and the inspection system of any aspect or embodiment disclosed herein and operative or configured to inspect the closed medical container for particulate matter.

The manufacturing system takes advantage of the effects and advantages offered by the inspection system according to aspects or embodiments.

The manufacturing system may comprise a formulation preparation system operative or configured to prepare the at least one liquid. The at least one liquid may comprise an active pharmaceutical ingredient (API).

The manufacturing system may comprise a process control system operative or configured to control at least one of the filling, closing, and, if present, formulation preparation system. The process control system may have an input interface coupled to the quality monitoring system and may be operative or configured to control operation of at least one of the filling, closing, and, if present, formulation preparation system responsive to an output of the quality monitoring system.

The manufacturing system may comprise a discarding station operative or configured to selectively discard the medical container if the inspection system determines that it contains at least one particle in its interior and the at least one particle is non-acceptable, based on the particle characteristics (such as chemical characteristics) determined by the inspection system.

According to another aspect, the invention is an inspection method of inspecting a medical container containing a liquid. The inspection method comprises positioning, by a sample holder, the medical container along an axis; irradiating, by at least one light source, the medical container with light; detecting, by at least one detector, return light from the medical container, the return light being detected in response to irradiating the medical container with the light; detecting and/or determining characteristics of a particle, by an evaluation system, based at least on an output of the at least one detector; and moving the at least one light source and/or the at least one detector around the axis while the sample holder holds the medical container in a rotationally and translationally fixed manner.

The inspection method according to this aspect of the invention is operative or configured to reliably detect particulate manner efficiently and reliably. The risk of false positives is not increased by rotation of the container, which would result in increased bubble formation. By moving a light source and/or detector of the optical system around the axis, all of the container can be analyzed. The capability of localizing particles, e.g. of performing three-dimensional (3D) particle localization, is increased.

The inspection method may be performed by the inspection system or manufacturing system according to any aspect or embodiment discussed herein.

Optional features of the inspection method and the effects attained thereby correspond to the optional features discussed in association with the inspection system.

According to another aspect, the invention is an inspection method of inspecting a closed medical container containing a liquid. The inspection method comprises positioning, by a sample holder, the closed medical container; irradiating, by a light source, the closed medical container with a Raman probe beam; detecting, using a Raman spectrometer, a Raman spectrum responsive to irradiating the closed medical container with the Raman probe beam; and determining characteristics of a particle in the closed medical container based at least on the Raman spectrum.

The inspection method according to this aspect of the invention allows a chemical analysis to be performed on any particle(s) localized within an interior of the container that also contains the liquid, while maintaining the medical container in a closed state. The chemical characteristics can be determined efficiently and without compromising integrity of the container. This is particularly useful when using the chemical characterization during mass production, where a medical container is to be discarded selectively only if the chemical analysis as obtained from the Raman spectrum shows that there is at least one non-acceptable particle within the container.

The inspection method according to this aspect may be performed by the inspection system or manufacturing system according to any aspect or embodiment discussed herein.

Optional features of the inspection method according to this aspect and the effects attained thereby correspond to the optional features discussed in association with the inspection system.

According to another embodiment, the invention is a manufacturing method, comprising filling a liquid into a medical container; closing the medical container with the liquid contained therein; and performing the inspection method of any aspect or embodiment disclosed herein to inspect the closed medical container for particulate matter.

The manufacturing method may be performed by the manufacturing system according to any aspect or embodiment discussed herein.

Optional features of the manufacturing method and the effects attained thereby correspond to the optional features discussed in association with the manufacturing system.

The invention is defined in the claims. However, below there is provided a non-exhaustive list of non-limiting examples. Any one or more of the features of these examples may be combined with any one or more features of another example, embodiment, or aspect described herein.
Example Ex1: An inspection system operative to inspect a medical container containing a liquid, the inspection system comprising:
   a sample holder operative to hold the medical container along an axis;
   at least one optical system having:
      at least one light source operative to output light incident onto the medical container; and
      at least one detector operative to detect return light from the medical container, wherein the at least one detector comprises a first comprising an opto-electrical transducer having a plurality of pixels; and
   an evaluation system coupled to the at least one optical detector and operative to detect and/or determine characteristics of a particle in the medical container based at least on an output of the at least one detector;
   at least one actuator operative to move the at least one light source and/or the at least one detector around the axis while the sample holder holds the medical container in a rotationally and translationally fixed manner;
   characterized in that
   the at least one light source comprises a first light source operative to output a light sheet, and
   the first detector comprises a tilt objective.
Example Ex 2: The inspection system of example Ex1, wherein the at least one actuator is operative to move the at least one light source and the at least one detector along a path that is curved around the axis,
   optionally wherein one, several, or all of the following applies or apply:
   at least a segment of the path extends in a plane perpendicular to the axis;
   the path comprises an elliptical arc;
   the path comprises a circular arc;
   the at least one actuator is operative to concurrently change a position and an orientation of the at least one light source to keep the illumination light incident onto the medical container and/or the axis;
   the at least one actuator is operative to concurrently change a position and an orientation of the at least one detector to cause the return light to be incident onto the at least one detector.
Example Ex 3: The inspection system of example Ex1 or example Ex2, further comprising a frame on which the at least one optical system is supported, wherein the sample holder is arranged in a fixed location relative to the frame, and wherein the at least one actuator is operative to move the at least one light source and/or the at least one detector relative to the frame.
Example Ex4: The inspection system of any one of the preceding examples, wherein
   the at least one actuator comprises a first actuator operative to move the first light source around the axis;
   optionally wherein the first actuator is operative to move the first light source around the axis such that the light sheet remains incident upon the axis as the first light source is moved around the axis.
Example Ex 5: The inspection system of example Ex4, wherein the first detector is operative to provide a first detector output responsive to the return light during illumination of the medical container with the light sheet, optionally wherein the first detector comprises a Scheimpflug camera.
Example Ex 6: The inspection system of example Ex5, wherein the evaluation system is operative to at least one of:
   detect, based at least on the first detector output, the particle when the particle is located in the light sheet;
   determine, based at least on the first detector output, that the particle is located in an interior of the medical container;
   discriminate, based at least on the first detector output, the particle from a bubble in a liquid within the medical container;
   discriminate, based at least on the first detector output, the particle from an impurity within a container wall of the medical container;
   determine, based at least on the first detector output for several different angular positions of the first light source and/or the first detector around the axis, information on a morphology of the particle, optionally a three-dimensional surface shape of the particle;
   determine, based at least on the first detector output, information on a size of the particle, optionally a three-dimensional size of the particle.
Example Ex7: The inspection system of any one of the preceding examples, wherein the at least one light source comprises a second light source operative to output a Raman probe beam and the at least one detector comprises a second detector coupled to a Raman spectrometer.
Example Ex8: The inspection system of example Ex7 when dependent on example Ex6,
   wherein the at least one actuator comprises a second actuator operative to move both the second light source and the second detector, wherein the second actuator has more degrees of freedom than the first actuator, optionally wherein the first actuator has one degree of freedom and the second actuator has at least two degrees of freedom and/or optionally wherein the second actuator comprises a multi-axis robotic arm or a multi-axis linear displacement actuator, and/or
   the inspection system comprises a control device operative to control the second actuator based at least on the first detector output.
Example Ex 9: The inspection system of example Ex7 or example Ex8, wherein the evaluation system is operative to determine chemical characteristics of the particle based at least on a second detector output provided by the second detector or a Raman spectrum provided by the Raman spectrometer.
Example Ex10: An inspection system operative to inspect a closed medical container containing a liquid, the inspection system comprising:
   a sample holder operative to hold the closed medical container; and
   a light source operative to output a Raman probe beam incident onto the closed medical container;
   characterized by:
   a detector operative to detect a Raman spectrum responsive to outputting the Raman probe beam; and
   an evaluation system coupled to the detector and operative to determine characteristics of a particle in the closed medical container based at least on the Raman spectrum.
Example Ex11: A manufacturing system, comprising:
   a filling device operative to fill at least one liquid into a medical container;
   a closure device operative to close the medical container with the at least one liquid contained therein; and
   an inspection system according to any one of the preceding examples operative to inspect the closed medical container for particulate matter.
Example Ex12: An inspection method of inspecting a medical container containing a liquid, the inspection method comprising:
   positioning, by a sample holder, the medical container along an axis;
   irradiating, by at least one light source, the medical container with light; detecting, by at least one detector, return light from the medical container, the return light being detected in response to irradiating the medical container with the light;
   detecting and/or determining characteristics of a particle, by an evaluation system, based at least on an output of the at least one detector, wherein the at least one detector comprises a first detector comprising an opto-electrical transducer having a plurality of pixels; and
   moving the at least one light source and/or the at least one detector around the axis while the sample holder holds the medical container in a rotationally and translationally fixed manner,
   characterized in that:
      the at least one light source comprises a first light source operative to output a light sheet, and
      the first detector comprises a tilt objective.
Example Ex13: An inspection method of inspecting a closed medical container containing a liquid, the inspection method comprising:
   positioning, by a sample holder, the closed medical container;
   irradiating, by a light source, the closed medical container with a Raman probe beam;
   characterized by:
   detecting, using a Raman spectrometer, a Raman spectrum responsive to irradiating the closed medical container with the Raman probe beam; and
   determining characteristics of a particle in the closed medical container based at least on the Raman spectrum.
Example Ex14: The inspection method of example Ex12 or example Ex13, which is performed by an inspection system according to any one of examples Ex1 to Ex10 or a manufacturing system according to example Ex11.
Example Ex15: A manufacturing method, comprising:
   filling a liquid into a medical container;
   closing the medical container with the liquid contained therein; and
   performing an inspection method according to any one of examples Ex12 to Ex14 to inspect the closed medical container for particulate matter.

### Brief Description of the Drawings

The inspection system, manufacturing system, and associated methods according to the invention are described in more detail hereinbelow by way of an exemplary embodiment and with reference to the attached drawings, in which:
Fig. 1 shows a manufacturing system according to an embodiment;
Fig. 2 shows an inspection system according to an embodiment;
Fig. 3 shows an inspection system according to an embodiment;
Fig. 4 shows an inspection system according to an embodiment;
Fig. 5 shows an inspection system according to an embodiment;
Fig. 6 shows an inspection system according to an embodiment;
Fig. 7 shows a plan view of the inspection system of Fig. 6;
Fig. 8 shows an image of a closed medical container obtained by an optical imaging system of an inspection system according to an embodiment;
Fig. 9 shows images of a volume of a closed medical container in which a particle is present, obtained for different angular positions of a light sheet by an optical imaging system of an inspection system according to an embodiment;
Fig. 10 shows an image of a closed medical container and a particle reconstruction obtained using an optical imaging system of an inspection system according to an embodiment;
Fig. 11 shows components of a compact Raman video probe of an inspection system according to an embodiment;
Fig. 12 shows an inspection system according to an embodiment;
Fig. 13 shows a flow chart of a method according to an embodiment;
Fig. 14 shows an artificial intelligence (AI) model that may be executed by an inspection system according to an embodiment;
Fig. 15 shows a schematic representation of a prior art inspection system;
Fig. 16 shows a schematic representation of a prior art inspection method.

### Description of Embodiments

In the following description certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "above", "upper", "proximal", "distal", and the like, may be used to describe one element's or feature's relationship to another element or feature as illustrated in the figures. These spatially relative terms are intended to encompass different positions and orientations of the devices in use or operation in addition to the position and orientation shown in the figures. For example, if a device in the figures is turned over, elements described as "below" or "beneath" other elements or features would then be "above" or "over" the other elements or features. Thus, the exemplary term "below" can encompass both positions and orientations of above and below. The devices may be otherwise oriented (rotated 90 degrees or at other orientations), and the spatially relative descriptors used herein interpreted accordingly. Likewise, descriptions of movement along and around various axes include various special device positions and orientations.

To avoid repetition in the figures and the descriptions of the various aspects and illustrative embodiments, it should be understood that many features are common to many aspects and embodiments. Omission of an aspect from a description or figure does not imply that the aspect is missing from embodiments that incorporate that aspect. Instead, the aspect may have been omitted for clarity and to avoid prolix description. In this context, the following applies to the rest of this description: If, in order to clarify the drawings, a figure contains reference signs which are not explained in the directly associated part of the description, then it is referred to previous or following description sections. Further, for reason of lucidity, if in a drawing not all features of a part are provided with reference signs it is referred to other drawings showing the same part. Like numbers in two or more figures represent the same or similar elements.

Systems and methods according to embodiments are operative or configured to detect and optionally further characterize visible particulate matter in an interior cavity of a medical container that also contains a liquid, such as a formulation including an an active pharmaceutical ingredient (API). The systems and methods provide an automated inspection technique. The systems and methods operate without requiring opening of the medical container and without requiring spinning of the medical container for detection, characterization and/or chemical identification of particles.

"Particulate Matter" is a general expression that covers all forms of particles that may be found in a parenteral drug product. To facilitate manufacturers' interpretation, various regulatory authorities (European, Japanese and U.S. Pharmacopeia) have decided to harmonize and share the same definition of particulate matter: "Particulate matter in injections and parenteral infusions consist of extraneous mobile undissolved particles, other than gas bubbles, unintentionally present in the solutions".

As used herein, "visible particles" may be understood to be or comprise particles having a diameter of 100 micron or more. The "visible particles" may also encompass smaller particle diameters. The diameter may be measured along the direction along which the particle has its longest extension.

Generally, particles are categorized as intrinsic, extrinsic, or inherent. Intrinsic particles are generated within the manufacturing process and may include silicone oil, rubber, glass, or stainless steel. Extrinsic particles come from outside the process and could include metal, human hair and skin, or dust. Inherent particles, such as protein aggregates or free fatty acids, are naturally present in biologics and may be acceptable with the appropriate control strategy.

Due to the potential impact of particulate matter on patients, regulatory authorities require information on the presence of particles, and evidence of the limitation, control and identification of any product-related impurities. The systems and methods of the invention address the need for automated inspecting of closed medical containers for particulate matter.

The inspection systems and methods according to some embodiments are also operative or configured to provide further analytical or other characterization. In contrast to conventional techniques, this extended testing is non-destructive and can be performed with the medical container being closed. The determination of the particle size, morphology and chemical identification is required to find the root cause of the particle formation. These investigations were conventionally not performed as routine tests in the manufacturing process and are only triggered when unexpected events and limit violations occur.

However, during the formulation development phase, particle characterization and identification is performed in a systematic way. Research on mechanistic formation and kinetics of inherent particles are conducted through stability studies to determine product specific profile over the shelf life. This profile, giving the expected characteristics and the changes that may occur over time, can be determined and documented using the inspection systems and methods disclosed herein.

In recent years, the pharmaceutical industry has been faced with new challenges regarding the increasing presence of inherent (proteinaceous aggregate or free fatty acid) particles at release or during storage of final drug product. A revision of the European Pharmacopeia monograph 2031 "Monoclonal Antibodies for Human Use" has been made to reflect this situation and the terms: "without visible particles, unless otherwise justified and authorized" were included into the requirement for tests and appearance. This means that a container contains inherent visible particles that are similar to those observed and documented during the development phase would still be considered as "essentially free of visible particle". The ability to assess inherent visible particles in a closed container is becoming increasingly important to avoid contamination and preserve sample for further analytics. The inspection systems and methods of some embodiments are operative or configured to address this need in an efficient manner, in contrast to some conventional analysis techniques that rely on opening of the container for further analysis (destructive testing), as previously described herein.

The inspection systems and methods of some embodiments also allow one to get a more comprehensive characterization of visible particles in closed containers. This addresses a need evidenced by the non-reproducibility frequently encountered for a manual process by human inspectors, the challenges related to the detection of air bubbles and the absence of nondestructive automated technologies for extended visible particles characterization (counting and size) and chemical identification.

The inspection systems and methods of the invention described herein provide a visual inspection set-up that offers a robust detection, a precise sizing, a quantification and a 3D localization of visible particles in a closed container based on light sheet microscopy. The inspection systems and methods may also provide the integration of Raman video probe to the visual inspection unit to achieve in-situ chemical identification.

The inspection systems and methods of the invention are suitable for being used for automated visual inspection technologies for smaller batches and for the inspection of units in the development phase. Reliability of visible particle detection can be improved by the inventive techniques, and root causes for particulate matter can be identified. The inspection systems and methods are not limited to these fields of use.

The inspection systems and methods of the invention use one or several actuators that displace components of optical system(s) during an optical measurement process relative to a medical container that is held immobile by a sample holder. The inspection systems and methods therefore address challenges encountered with techniques that use spinning containers, which may be associated with the particles and/or the spinning process, as well as other sources.

The particles that can be present in the liquid filled containers can originate from different sources and have different sizes, shapes, compositions, physical properties (such as density) and optical properties (such as refractive index or transparency). Some particles, usually made of metal or glass, tend to have a very high density, which makes it more difficult to get them moving or keep them in motion for the duration of data acquisition in conventional techniques. In some cases, particles could be stuck to the inner wall of the container, which make them invisible to the detection algorithm in conventional techniques. Moreover, fiber like particles, which are longer in one dimension, could be difficult to detect depending on their orientation within the container and the camera/sensor in conventional techniques. The same applies to transparent particles with refractive index close to the one of the drug product solution in conventional techniques. These challenges are addressed by the inspection systems and methods of the invention that are designed for moving component(s) of the optical system(s) around the medical container during data acquisition.

Conventional automated visual inspection systems (such as the one explained with reference to Figure 15) are equipped with a spinning unit to set the particles in motion to make them detectable by a conventional detection algorithm. However, this process is one of the major causes of air bubble formation, which is one of the well-known source of false positive detection. Furthermore, some biological products can be sensitive to agitation and require careful handling of the container, while others tend to generate a foam on the surface that complicates the sample visualization. In addition, the rapid movement of the particles in the fluid is an obstacle to a precise 3D localization of the particles, which could be useful for further analysis. These challenges are addressed by the inspection systems and methods of the invention that are designed for moving component(s) of the optical system(s) around the medical container during data acquisition while keeping the medical container immobile during data acquisition

The inspection systems and methods of the invention can provide a binary output indicating the presence or absence of visible particles in the container. The inspection systems and methods of the invention also address the need for a better and more complete characterization of the particles in the closed container.

The inspection systems and methods of embodiments of the invention use light sheet microscopy to perform the detection of non-moving particles in a closed container, as well as their quantification, 3D size measurement and 3D location needed for further analyses. Data acquisition for spectroscopic techniques (in particular Raman spectroscopy) may be performed for an even more complete characterization.

The inspection systems and methods of embodiments of the invention are operative for performing robust detection and accurate localization (of visible particles (which may be, e.g., larger than 100 microns or even less) made of different materials in an immobilized medical container filled with liquid drug product. The suppression of the rotation of the sample stage, allowing an extended analysis in closed container, offers new opportunities of detection compared to conventional detection systems that are based on the detection of moving particles.

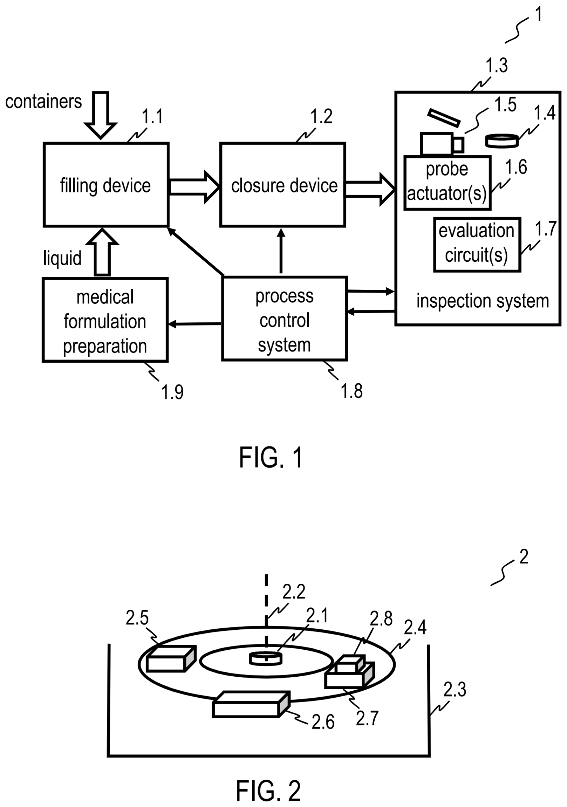

Figure 1 shows a manufacturing system 1 for manufacturing medical containers containing a liquid therein. The medical containers may be vials or syringes, without being limited thereto. Each medical container may have a substantially cylindrical transparent wall extending circumferentially around a longitudinal axis of the medial container. Each medical container may be a parenteral drug product.

The manufacturing system 1 comprises a filling device 1.1. In operation, the filling device 1.1 fills a liquid into a cavity of the medical containers. The liquid may be a formulation comprises one or several active ingredients. The liquid may be or may contain a parenteral drug. The manufacturing system may comprise a medical formulation preparation system 1.9 which, in operation, may prepare the liquid for filling into the medical container.

The manufacturing system 1 comprises a closure device 1.2. In operation, the closure device 1.2 closes the medical container with the liquid contained therein. The closure device 1.2 may be operative or configured to close the medical container such that liquid egress is prevented until the medical container is opened.

The manufacturing system 1 comprises an inspection system 1.3 according to an embodiment. The inspection system 1.3 comprises a frame, which may define an enclosure. The inspection system 1.3 comprises a sample holder 1.4. According to the invention, the sample holder 1.4 is operative or configured to position and hold a medical container that is being inspected for particulate matter in an immobile, in particular nonrotating state while it is being inspected using optical techniques. The inspection system 1.3 comprises one or several optical systems. The optical systems may comprise an imaging system (also referred to as first optical system herein) that, in operation, irradiates a light sheet onto the medical container and detects, using an image sensor (such as a CCD sensor or other image sensor), the resulting image of the medical container. The imaging system is rotated around the medical container through an angle that may but does not need to reach or exceed a full rotation (360°). Light source and detector of the imaging system may be rotated so as to maintain their relative arrangement while being rotated. The image information recorded for several angular positions is evaluated to detect particles, discriminate a particle from an air bubble, infer particle size information, infer particle morphology information, and/or infer a particle location in three dimensions (3D). The optical systems may comprise components of a Raman systems, such as a source of a Raman probe beam and a Raman detector that detects the light obtained by Raman scattering of the probe beam of particles in the medical container. A Raman spectrometer does not need to be movably mounted, but the source of the Raman probe beam and the Raman detector are movably mounted relative to the sample holder. One or several actuators 1.6 of the inspection system 1.3 displace the optical system(s) relative to the sample holder 1.4. Evaluation circuit(s) 1.7 may evaluate the detector outputs, including advances processing such as comparison to a library of Raman spectra for chemical analysis. The evaluation circuit(s) 1.8 may comprise or may be implemented as processors, controllers, application specific integrated circuits (ASICs), field programmable gate arrays (FPGAs), other integrated circuits, circuits comprising quantum bits (qubits) and/or quantum gates, or combinations thereof.

The manufacturing system 1 comprises a process control system 1.8. The process control system 1.8 may control at least one component of the manufacturing system 1 responsive to a result determined by the inspection system 1. For illustration, the manufacturing system 1 may control one or several of the filling device 1.1, the closure device 1.2, and, if present, the medical preparation system 1.9 as a function of whether the inspection system 1.3 (i) determines a visible particle to be present in the medical container and (ii) if a particle is present, determines that the particle does not have characteristics that render it acceptable for being contained in the medical container for use of the medical container. The process control system 1.8 may control an unloading device that removes the medical container from the sample holder 1.4 such that the medical container is discarded if the inspection system 1.3 (i) determines a visible particle to be present in the medical container and (ii) if a particle is present, determines that the particle does not have characteristics that render it acceptable for being contained in the medical container for use of the medical container.

Alternatively or additionally, the inspection system 1.3 may comprise or may be coupled to a human machine interface (HMI), such as a graphical user interface (GUI), to output information on the results of the inspects performed on the medical container.

Figure 2 shows a schematic representation of an inspection system 2 according to an embodiment. The inspection system comprises a sample holder 2.1 operative or configured to hold a medical container in an immobile state while optical measurements are being performed thereon and in particular while actuators 2.6, 2.7 cause optical systems 2.5, 2.8 to rotate about an axis 2.2 along which the medical container extends. The medical container preferably has a transparent, substantially cylindrical wall that circumferentially surrounds the axis 2.2 when held by the sample holder 2.1.

The sample holder 2.1 may be stationary relative to a frame 2.3 of the inspection system 2. A first actuator 2.6 may be operative or configured to displace at least a first optical system 2.5 (such as an imaging system) relative to the axis 2.2. The first actuator 2.6 may be operative or configured to rotate a support 2.4 on which the first optical system 2.5 is arranged. The first optical system 2.5 may comprise components (such as a first light source and first detector) that are offset from each other around the circumferential direction by an angle that may be fixed as the first optical system 2.5 is rotated about the axis 2.2.

A second actuator 2.7 may displace at least a second light source and/or second detector of a second optical system 2.8 (and optionally additional components such as an interferometer beam path) relative to axis 2.2. The second actuator 2.7 may be operative or configured to effect translatory displacement along the axis 2.2 and transverse to the axis 2.2. The second actuator 2.7, alone or in combination with the first actuator 2.6, may allow the second light source and/or the second detector of the second optical system 2.8 to be positioned in 3D relative to the sample holder 2.1. The second actuator 2.7 may be controlled, in use, so that the second optical system 2.8 sequentially probes any particles that have been identified as being located in an interior cavity of the container, using the first optical system 2.5.

In one embodiment, the second actuator 2.7 may comprise a multi-axis robotic arm, such as a 3-axis robotic arm. In another embodiment, the second actuator 2.7 may be operable in combination with the first actuator 2.6. The first actuator 2.6 may be operated, under control of a control device (which may be implemented as a computer), to adjust a desired angular position of the second light source and/or the second detector of the second optical system 2.8 around the axis 2.2. The second actuator 2.7 may be operated, under control of the control device, to provide a linear displacement along one or two axes, to thereby target a particle at a desired position along the axis 2.2 and/or at a desired radial position (measured transversely to the axis 2.2) in the medical container.

Inspection systems and methods will be described in further detail below. The inspection systems and methods of embodiments involve a novel illumination and camera/lenses configuration rotating around a stationary container filled with a liquid drug product. The visual inspection system is operative or configured to output a laser light sheet, positioned to aim on the symmetry axis of the container, used to illuminate the particles in the closed container. In addition, a video camera with a tilt (Scheimpflug) objective mounted on it, is positioned at a defined distance and angle from the light sheet to ensure that its field of view is adjusted to the illuminated part of the sample. A motorized mechanical system is then used to hold the light sheet and the video camera and enable their rotation around a static sample ensuring the inspection of the whole volume.

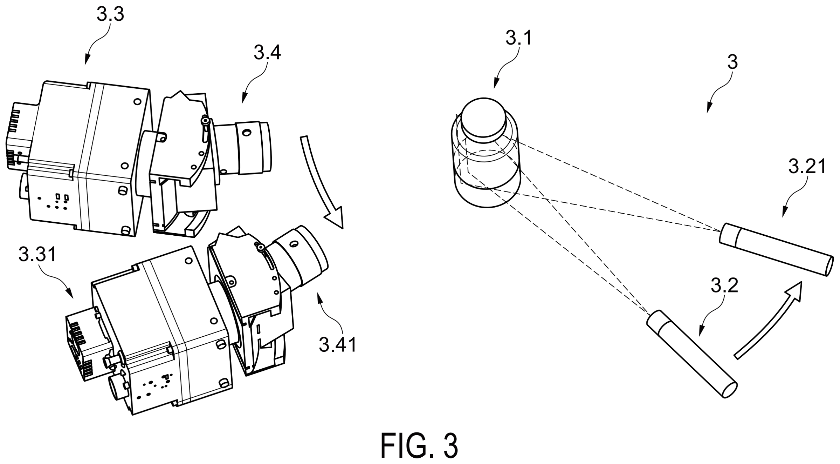

Figure 3 shows an inspection system according to an embodiment. A container 3.1 (here represented by a vial, it being understood that the container can have a different container and can be a syringe or other type of container that can hold a liquid drug product) is maintained immobile in the center of the set-up by a sample holder. A laser 3.2 generating a sheet of light high enough to illuminate the entire height of the sample is directed and may be focused on the center axis of the container. A video camera 3.4 mounted with a tilt objective 3.3 is positioned accordingly relative to the container and the light sheet to acquire images of the sample. A representation of of the laser 3.21, the camera 3.31 and of the lens 3.41 tilted after a rotation has been added to represent the scanning of the set-up around the stationary container 3.1. The motorized mechanical system allowing the rotation of the laser 3.2, the camera 3.3, and the objective 3.4 is not shown in Figure 3 but is shown and explained in more detail elsewhere herein.

The rotation of the optical imaging system of Figure 1 allows to scan the whole volume of the container and to easily detect the visible particles inside, if there are any present. If a particle is positioned in the width of the light sheet, it emits a reflection that is clearly distinguishable on the image acquired by the camera. Particles larger than a width of the light sheet can be found on more than one frame. Image acquisition increments (in degrees) are defined by a diameter of the container and the width of the light sheet to acquire frames of the entire volume and even to reconstruct it in three dimensions. The inner and outer walls of the container are also visible on the collected image, which allows an evaluation circuit (not shown) to easily distinguish the particles inside or outside the interior cavity of the medical container. For illustration, particles that are located in the interior cavity can be distinguished from particles within the wall thickness and particles on an outer side of the container wall.

The tilt objective 3.4 allows overcoming challenges related to the sample configuration. The cylindrical shape of the container filled with liquid drug product creates a lens effect that causes blind spots preventing a complete inspection of the sample. Moreover, this imaging set-up offers a very sensitive imaging system. The positioning between the camera and the direction of the illumination created by the laser light sheet is set so as to reduce/eliminate unwanted reflections. Aperture lasers with light traps can also be used to prevent the light emitted by the light sheet from being reflected by set-up components.

Analyzing particles suspended in a liquid solution with this new proposed inspection system and method can become challenging if the particles are moving too fast inside the container. To avoid this, the medical container 3.1 is maintained for several seconds before and during the analysis. In addition to that, the the visual inspection components and mechanical/robotic axis are selected so as to enable a fast scan of the sample. One way to reduce the analysis time is to add one or more light sheets and cameras, which increases the scanning area that can be concurrently irradiated at any given time during data acquisition.

The complete set-up can be adjusted according to the needs of the analysis. For example, two light sheets with a high width and two cameras scanning a sample very quickly can be used when desired to offer a robust detection in a reduced time. A single light sheet with a thin width and one camera scanning a sample with a finer increment can be used to allow a robust detection but also increases the accuracy of the 3D localization of the detected particles and the resolution of the 3D reconstruction.

As explained above, inspection systems for particle inspection in liquid filled containers face many challenges that originate from different sources. Maintaining the sample stationary and detecting nonmoving visible particles provides significant advantages over conventional inspection systems:

One of the most widespread challenges with conventional systems is the creation of air bubbles due to the motion of samples. These air bubbles are detected by inspection systems as visible particles and represent one of the main causes of false detection (false positive). The inspection system and method according to the invention is not subject to this challenge and offers a more reliable and robust detection.

The detection of non-moving particles offers a solution for the one that are too dense to be moved during the rotation process or the one that are stuck to the inner wall cannot be detected with conventional systems. The same applies for visible particles present in high viscous product or low filled volume sample that are not set in motion properly enough to be detected.

Another important advantage of this inspection system and method is that it can be used for several types of containers (vial or syringe) and different sample configurations. Indeed, it is robust enough to inspect containers of small or large diameter and with a small or large filling volume with no need to change its components. The scanning done by the light sheet and the camera with a tilted lens is not affected by the challenge related to the meniscus of the sample or the large depth of field, which is triggered by liquid filling level changes.

Inspecting lyophilized or emulsion/suspension product for the presence of visible particles is challenging due to the constraints of visually inspecting their contents. With conventional methods, additional tests involving reconstitution, dissolution or disruption of few samples are usually necessary to ensure the quality of a batch. The proposed new inspection system and method offers new capabilities to inspect these products that are difficult to inspect. One of the new possibilities is to visually inspect sample prior to the lyophilization process. In fact, the freeze-drying process, which requires containers with a non-closed cap, does not allow the samples to be moved, making it impossible to inspect those using conventional methods. Another interesting possibility for emulsion/suspension products is the enhanced sensitivity for visible particle detection provided by the illumination created by the light sheet.

The use of a light sheet and a camera with a tilted lens scanning a static sample for the detection of visible particles offers various effects and benefits as compared to the conventional system, providing a more robust detection and opening new applications for the future. A more comprehensive characterization of the detected particles is achieved. The slicing of the sample and the particles by virtue of the light sheet allows to perform a 3D reconstruction which is not possible with the conventional systems. This offers a very accurate 3D localization of each single particles detected useful to perform a chemical identification with spectroscopic techniques (such as Raman spectroscopy) in a second step for example. The 3D imaging of particles allows a more advanced characterization by offering a 3D visualization of the morphology and a 3D sizing. Moreover, the inspection systems and methods may use image classification algorithms using machine learning that are applied on those 3D images to identify the particles detected.

Inspection systems and methods according to embodiments of the invention may comprise a Raman video probe integrated into the inspection system.

In contrast to the conventional procedure of chemical identification of particles, which consists of analyzing particles captured on a filter, the inspection system and method may be operative or configured to perform data acquisition for Raman spectroscopy in a closed container filled with liquid drug product. The inspection system and method address the challenge of analyzing the particles which are in a liquid medium, which prevents the use of several conventional methods of identification. Raman spectroscopy is a suitable method for analysis in closed containers due to the low interference with water and the glass wall. Moreover, the Raman backscattering process facilitates in situ analysis, as it does not require sample preparation.

The particles are not immobilized or captured and can be located anywhere in the sample. This represents a great challenge, as the chemical identification of a particle requires sufficiently long data acquisition, i.e., the particle must remain in a focal point of a Raman instrument for a minimum time which may be a few seconds (to capture enough light scattered). The inspection system and method therefore use a probe that offers a better mobility and can be controlled in position responsive to 3D particle locations determined using the light sheet and camera with tilt objective.

The visual inspection system described above and explained in some detail with reference to Figure 3 is designed to facilitate the integration of a motorized Raman probe. Indeed, maintaining the medical container stationary allows the particles to remain as immobile as possible and increases the 3D localization accuracy which is necessary for the focusing of the Raman probe. The data collected by the visual inspection can be used by a control device to control the position in 3D of the Raman probe around the sample and to focus it on each particle one after the other.

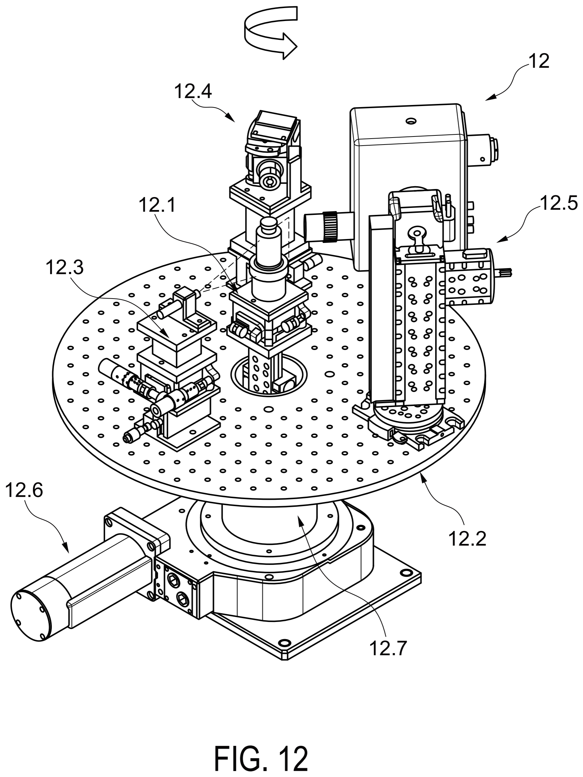

The motorization of the probe can be done with a robotic arm or a combination of mechanical motorized axes. Enough degree of freedom must be given for positioning the probe to allow it to aim and focus regardless of the position of the particle inside the sample. The Raman probe must be able to at least rotate around the sample (by aiming on the symmetry axis of the container), change its height and its focus. The mounting of the probe on the same rotating system as the laser light sheet and the camera (as schematically shown in Figure 2 and as shown in greater detail in, e.g., Figure 12) makes calibration easier and increases positioning accuracy.

The incorporation a video camera to the Raman probe allows a live stream adds an additional capability to the whole set-up. This makes it easier to calibrate the system since the image obtained by the camera can be used to control the correct positioning of the probe. Moreover, obtaining images during the analysis makes it easier to ensure that the system has been well focused during the measurement. This live stream can be used to track the particle and to correct the position of the probe during the data acquisition to ensure that the particle remains in the Raman focal plane during the measurement.

In addition, the acquisition of in situ images of particles with a higher resolution can be used subsequently to better characterize the particles. These images provide information on the morphology, allow a more accurate sizing and can be processed by an image classifier based on machine learning to perform particle classification. The integration of a light unit can also be considered to illuminate the particles to be analyzed.

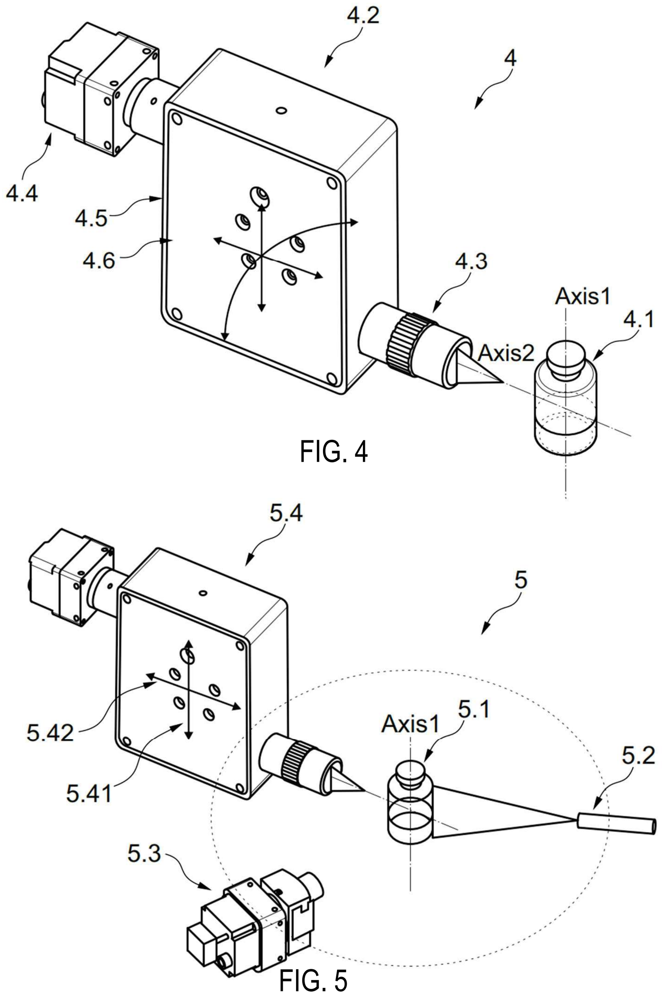

Figure 4 shows a second optical system 4 of an inspection system. The second optical system 4 is operative or configured to perform data acquisition for Raman spectroscopy on particles in a medical container 4.1. The second optical system 4 a probe 4.2. The probe 4.2 combines a light unit 4.5, a video camera unit 4.4 and a Raman probe 4.6. The probe 4.2 is operative for mounting various microscope objectives 4.3, offering different measurement possibilities. The Raman light emitted and backscattered is received and processed by the Raman probe 4.6. The illumination (a probe beam) is created by the light unit 4.5. The image obtained by the video camera 4.4 passes through the same optical path when exiting/entering the microscope objective 4.3.

Figure 4 provides a representation of the application of this probe for the chemical identification of visible particles present in the static sample 4.1. The Raman video probe 4.2 is mounted on a mechanical/robotic motorized assembly allowing to control its position in 3D around the sample. Note that the motorization system of the probe is not represented on Figure 4.

The Raman probe of the inspection system and method also consider another challenge regarding the physical condition of the sample. The cylindrical glass container filled with a liquid drug product act as a cylindrical lens. Consequently, a strong astigmatism can occur. Even if the probe is positioned to aim at the center axis of the container, the acquired image can be distorted and would not allow to focus correctly on the particles. The same challenge will occur for the emitted and backscattered Raman light. The probe 4.2 of the inspection system and method therefore has a compensating lens between the Raman probe 4.5 and the medical container 4.1 to correct this lensing effect. The compensation lens may take into account the parameters of the Raman video probe components, the Raman spectrometer and the sample. The lens may be container-specific and may have a configuration according to each container's diameter.

The complete Raman system can be partitioned between the probe 4.2 and the spectrometer. The two parts can be connected by two optical fibers, one used for the emitted light to excite the sample and another one used for the backscattered light collection. These components and their parameters are chosen to fulfill various purposes. For example, the microscope objective 4.3 to be mounted on the probe 4.2 is selected so that the working length is sufficient to reach all particles present in the sample, while maximizing the numerical aperture (NA) to ensure proper collection of backscattered light. In addition, the laser wavelength is selected so as to enhance the Raman scattering process and reduce the fluorescence backgrounds.

The interpretation and processing of the raw Raman spectrum collected may comprise data processing like background correction before spectral analysis. Due to the sampling condition the Raman spectra that will be collected will probably be composed of backscattered light from the particle to be identified but also from the surrounding environment (glass from the container and protein formulation). A reference spectral database under similar analysis conditions may be used to improve the results of the matching algorithm and facilitate the identification of the particles.

The integration of a complete Raman system into a visual inspection set-up offers new capabilities of measurement. Eliminating the filtration step (Figure 16) saves time and resources, avoids product consumption and potential contamination of the sample and above all, it will allows the automation of the whole process of particle identification. Analyzing directly in a closed container, applying spectroscopic methods, is therefore considered to increased productivity and reliability of results. The incorporation of the motorized probe provides a fully automated system to ensure high efficiency and, if desired, throughput. The inspection system and method disclosed herein address the challenges of combining Raman spectroscopy with a visual inspection system to perform an *in situ* chemical identification of a visible particle or of visible particles.

The inspection system and method address the need to obtain a more comprehensive characterization of visible particles in closed containers. The combination of the new inspection system and method for non-moving visible particle detection in closed container with in-situ Raman spectroscopy for chemical identification provides a complete system for visible particle analysis in a closed container.

Figure 5 shows an inspection system 5 that combines a visual inspection system with a light sheet source 5.2 and a camera 5.3 with tilt objective (for particle detection, localization, and/or sizing) and a Raman video probe 5.4. The medical container 5.1, represented here by a vial, is placed and kept immobile in the center of the system. Its symmetry axis is placed along an axis 5.1 by a sample holder (not shown), with the axis 5.1 being used as a reference for the positioning and movement of the system components. The laser light sheet source 5.2 and the camera 5.3 are mounted on a motorized rotating system allowing the scanning for the detection, characterization and 3D localization of visible particles that may be present in the container 5.1. The 3D location data collected is then used to control the position of the motorized Raman video probe 5.4, allowing it to aim and focus on each detected particle one by one, in order to perform their chemical identification. The system is designed in such a way that all possible containers and configurations can be analyzed with requiring only few hardware adaptations (such as replacement of the objective of the Raman video probe 5.4 and/or of a compensating lens).

The inspection systems and methods provide a robust detection of visible particles while reducing the variation of the manual visual inspection process, thereby meeting industry requirements. By performing visible particle quantification, accurate particle size measurement and high-resolution image capture for morphology information, the inspection system and method provides various effects over conventional fluidics imaging system while being non-destructive. Finally, the integration of Raman spectroscopy, which allows the chemical identification of particles, can replace the conventional method involving the filtration of the sample. The inspection systems and methods provide the possibility to characterize visible particles present in parenteral drug products in a non-destructive and fully automated way. The inspection systems and methods provide a link between morphology, size and chemical identification of each particle present in a sample.

The ability to perform in-situ extended characterization is a major advantage over conventional methods. In-situ analysis reduces the risk of loss and damage of samples with atypical particles that are often available in limited numbers. At early stages of development of drug product only a small volume of sample is available for testing, therefore any method allowing analyzing without sample losses is recommended. In addition, the traditional methods require the opening of the sample and have to be performed in a special "particle-free" laboratory which can represent a challenge.

The application of the new inspection system and method disclosed herein provides the opportunity to improve the formulation development by enabling a new approach to study the mechanistic formation and kinetics of particles. The analysis of particles in a closed container on regular time points provides indications to understand better protein aggregation pathways and the possible factors that affect or control the protein aggregation process.

The data collected by the visual inspection part 5.2, 5.3 offers the benefit of measuring images in real time and under conditions where particles remain suspended which is an advantage over conventional techniques. This allows superior imaging of highly irregular shaped particles and monitoring the dynamic behavior of particles if the size distribution is changing over time.

For products containing high or varied particle counts, chemical identification is key in assessing potential mechanism and impact on product quality. The presence of extrinsic particles, such as pieces of glass and/or rubber, and silicone oil droplets may act as "nucleating sites" in promoting aggregation of biologics. Material of composition of a foreign particle typically has a unique Raman spectrum. Therefore, it is possible to identify the source of foreign particle contamination using the inspection system and method disclosed herein. This feature is valuable in finding root causes of particles seen in development and manufacturing.

The inspection system may be integrated into the existing capabilities of manufacturing sites of parenteral drug products. The installation of the inspection system does not require a special environment to operate. The provision of an inspection system that performs extensive particle analysis in a fully automated manner allows for results that are more reliable in a short period of time which facilitates investigations in response to detection of atypical particles in samples. While the more thorough analysis may lead to longer analysis times as compared to conventional inspection systems, several inspection systems according to the invention may be installed and operate in parallel to provide a desired throughput. For example, the re-inspection of all ejected containers with at least a visible particle detected in it would allow to make a double check giving important information on the potential particles present in the products but also the performance of the processes implemented.

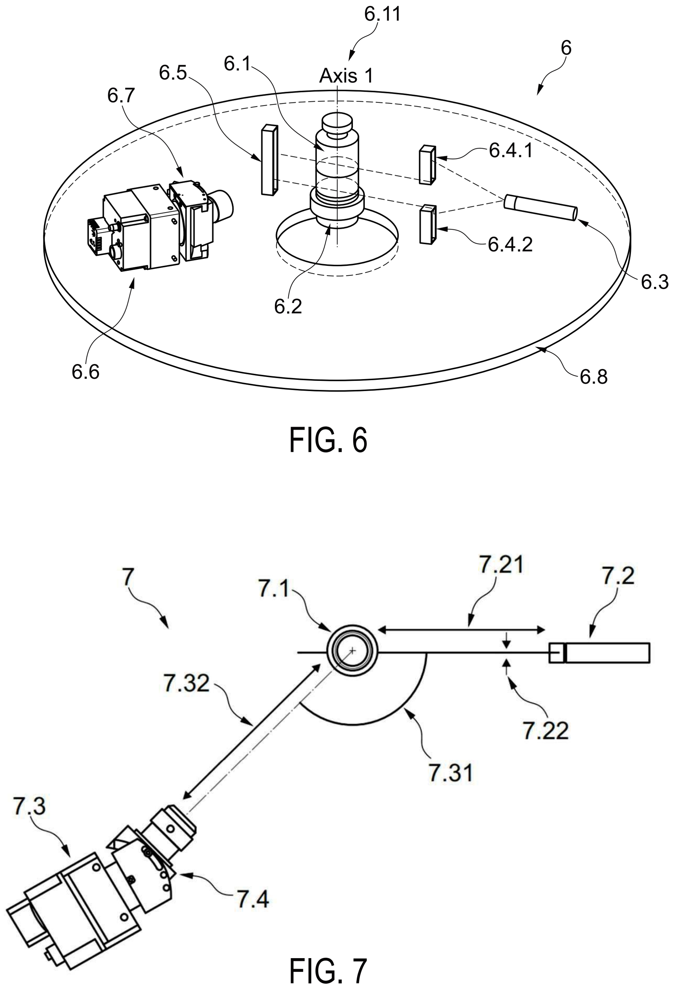

Figure 6 shows an inspection system 6 according to an embodiment. The inspection system is operative or configured to detect and characterize particles in an interior of a medical container 6.1. The inspection system 6 comprises a sample holder 6.2, a laser 6.3 operative or configured to generate a light sheet, laser apertures 6.4.1, 6.4.2, a laser trap 6.5, a video camera 6.6 mounted with a tilt objective 6.7, and a motorized mechanical structure 6.8.

The sample to be inspected for the presence of visible particle in it can be a liquid drug product filled in a cylindrical container. The inspection system 6 is operative or configured to perform the inspection for samples that have a variety of different properties of the liquid drug product such as viscosity, density, turbidity, opacity, fill volume, etc. The cylindrical container can be made of different materials (such as glass or polymer for example) and can have any one of various heights and diameters. A vial is shown in Figure 6, but the medical container can be represented by any type of cylindrical container such as a syringe.

For a sample to be analyzed, the laser light sheet must illuminate the area of interest of the sample and an image must be captured by the video camera 6.6. The container is closed by having the closing system in its final position (the stopper, for vials and plunger, for a syringe). The inspection system 6 does not require the sample to be in motion. Therefore, the inspection system 6 can be used for inspecting a sample before a freeze-drying process. The orientation of the sample that is set by the sample holder 6.2 is set to enable all of the liquid inside the container to be inspected. For a container with a stopper (like a vial), a standing position is preferred, i.e. with the stopper upwards. The same applies to containers with a needle (like syringe).

The sample holder 6.2 is used to ensure proper positioning and orientation of the sample into the 6 innovative visual inspection system. The axis 6.11 along which the symmetry axis of the medical container 6.2 is arranged represents the reference axis of the complete 6 system, which is used to orientate the laser light sheet, the video camera 6.4 and the rotation of the motorized mechanical structure 6.8. The choice of the components making up the sample holder 6.2, which allows its positioning and orientation, may depend on the accuracy requirements of the inspection system 6. The sample holder 6.2 may comprise a flat platform with a footprint (small enough to ensure visibility of the bottom of the sample) of cylindrical shape and diameter of the sample to be analyzed. This proposal will be container specific and modified according to the diameter of the sample to be analyzed. A more complex design of sample holder 6.2 could include mechanical/robotic motorized axes that can be used for any type of sample and would offer a better positioning accuracy. In addition, this configuration of the sample holder 6.2 allows the automation of the sampling of the complete system.

Unlike conventional inspection systems, the inspection system 6 detects non-moving particles. The medical container stage does not need to be rotated and must remain stationary during the analysis. Additionally, the syringes can be filled with different volumes which implies that the position of the plunger can vary. The height of the laser light sheet generated by the laser 6.3 and imaged by the camera 6.4 may be kept fixed in the inspection system 6 to facilitate their calibration. It is therefore preferable that the sample holder 6.2 be motorized to control its height according to the sample to be inspected.

The inspection system and method operate based on the scanning of an immobilized sample. The laser 6.3 can generate a sheet of light. Another light source can be used that is capable of illuminating a thin area comparable to a plane. The light sheet generated by the laser 6.3, oriented to pass through the axis 6.11, passes through the sample and illuminates an area inside the container, as well as outer walls of the container. If a particle is located within the thickness of this sheet of light, an intense light will be reflected and/or scattered from it that will allow the particle to be detected. The contrast between the light reflected by the particle and the surrounding area inside the sample is very strong, which makes it a very sensitive system.

The sheet of light passes through various optical media and may be subject to some diffusion. It is therefore possible that its shape and width are not completely uniform at all its points. To compensate for this, the light sheet generated by the laser 6.3 can be focused by an optical assembly inside the laser. One approach is to focus on the area captured by the video camera 6.6 to obtain a sharp plane and ensure the best illumination of the area of interest.

In an exemplary embodiment, the laser light sheet can be generated by a FLEXPOINT ^{®} MW nano laser available from Laser Components, with a thickness from few microns to few millimeters, with an output power up to 100 mW and a wavelength in a range from 635 nm to 785nm (red), from 405 to 450nm (violet), and/or from 520 to 532 (green). In one embodiment, the laser light sheet can be generated by the FLEXPOINT ^{®} MW nano lasers from Laser Components, with a thickness from 10 to 330 microns, a focus distance from 0 to 1000 mm, with an output power of 30mW and a wavelength of 520 to 532 (green).

Figure 7 shows a top view of a first optical system 7 of the inspection system. The arrangement and characteristics of Figure 7 may be applied to the first light source outputting the light sheet and the first detector which detects the light reflected and/or scattered as the light sheet passes through the medical container 7.1.

A width 7.22 of the light sheet is a parameter which is selected to ensure the detection of particles with a size starting from, e.g., 100 microns (with particles having a size greater than 100 microns being also detectable). An adjustment ring may be provided, which may be integrated into a laser 7.2, to provide the possibility to adjust the width 7.22 of the light sheet using a special optical system. The width 7.22 of the light sheet is used to calculate the increments (which also depends on the diameter of the sample) of the scanning so as to cover the whole volume of the medical container 7.1 and to acquire images with a video camera 7.3 equipped with a tilt objective 7.4.

A very thin light sheet increases the scanning resolution but requires a larger number of images to be acquired to cover the entire volume of the medical container 7.1. While a larger sheet of light can reduce the scanning time with larger increments it reduces the scanning resolution. It is therefore necessary to find the right compromise between width of the light sheet, increment value to ensure robust detection (even of smaller particles) while optimizing the image volume acquired by the video camera 7.3. The width 7.2 may be kept constant and the increment value may be adjusted according to the diameter of the medical container 7.1. This may be done automatically, depending on the medical container to be analyzed.

The laser light sheet is oriented in parallel and impinging onto the axis 6.11 to reduce the reflection of the light sheet passing through a cylindrical wall of the medical container 7.1 filled with liquid which can act as a lens. Furthermore, it facilitates the slicing of the medical container 7.1 since the laser light sheet is mounted on a rotating system (such as the system 6.8) having as rotation axis the axis 6.11 along which the sample holder positions the symmetry axis of the medical container 7.1. Proper optical alignments are required, even if a small deviation can be acceptable.

The laser is positioned at a distance 7.21 and height that ensures that the entire height filled with liquid inside the container is illuminated by the light sheet. The top as well as the bottom of the liquid in the container is illuminated. In some configurations, especially for syringes, the bottom of the sample is not always perfectly flat (conical plunger). The laser 7.2 is thus positioned close enough so that the angle of illumination can go beyond this obstacle and illuminate the entire bottom of the sample. After optimizing the distance between the 7.2 laser light sheet and the medical container 7.1, it the focus of the light sheet can be adjusted on an area of interest that will be captured by the video camera 7.3. The laser 7.2 generating the light sheet is mounted on a rotating mechanical structure (such as the support 6.8) so that the orientation of the laser and its distance 7.21 can be locked. The same applies to its height with respect to the sample 6.1. The only possible movement of the light sheet generated by the laser 7.2 is effected by the rotating mechanical structure (such as the support 6.8) allowing the illumination and consequently the scanning of the complete sample.

The visual inspection system 7 is sensitive. It is therefore desired to reduce and/or identify reflection from anything other physical elements than particles that may be present in the sample. The laser apertures 6.4.1, 6.4.2 placed above and below the laser light sheet can capture light not useful for the illumination of the sample and avoid its propagation into the video camera 6.6. The laser apertures 6.4.1, 6.4.2 can be combined with one or several laser traps 6.5 to further reduce undesired artefacts. To have a fully automated system, the positions of the laser apertures 6.4.1, 6.4.2 can be controlled independently by two motorized mechanical axes. Their positions will be adapted according to the height of the container and the filling volume of the sample. The volume of interest to be illuminated represents the portion of the sample filled by the drug product liquid. It may also be possible to illuminate the unfilled part (which is on top) to inspect for particles that may be stuck to the wall of the container.

The light trap 6.5 can be dimensions (e.g., can be wide enough and high enough) to cover the light sheet. The light trap 6.5 can be attached to a sample exit to interrupt the propagation of the light in the set-up. The light trap is oriented parallel to the light sheet generated by the laser 6.3 and positioned at approximately the same height as the sample.

A housing (not shown) covering the entire set-up can mitigate the risk that light from the environment is reflected on the camera 6.6, 7.3. At the same time this housing could be useful for safety issues related to the laser light sheet. This housing is large enough to cover the imaging system and the motorized mechanical system allowing its rotation.

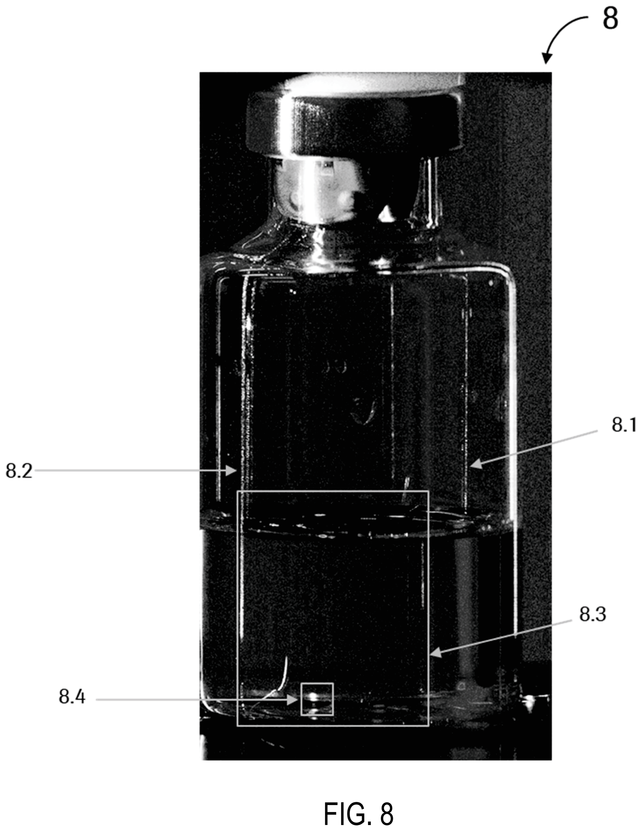

At least one video camera 6.6, comprising charge coupled device (CCD) sensors, is used to acquire images of the sample area illuminated by the laser light sheet. High-definition cameras are used to ensure that the pixel size is smaller or equal to the smallest particle size target to be detected. A field of view (FOV) of the camera is large enough to have a complete image of the sample 6.1. The acquisition of the images is defined by the increment value allowing the slicing of the whole volume of the sample. Acquisition of each image can be triggered by the mechanical rotating system 6.8. The mechanical rotating system 6.8 may have an angular sensor. The image acquisition may be triggered by an output of the angular sensor. A low exposure time of the video camera 6.6 is useful since the light reflected by a particle present in the sample is strong (Figure 8) compared to the other features present on the image. Such a setting allows a better characterization of the particles by avoiding an over exposure of the pixels illuminated by the presence of particles. If the color information of the particles is not important, separating the color channels (such as RGB) and selecting a single channel that can match the wavelength or color of the laser light sheet reduces the amount of data collected.

The configuration of the sample, a cylindrical object filled with a liquid, acts as a lens that creates blind spots when inspecting the sample with conventional optical systems. The use of a tiltable lens 6.7, 7.4 offers a very effective solution to this challenge by providing a non-perpendicular viewing angle to the light sheet in order to avoid these blind spots. A tiltable mount may be compatible with any C-mount camera. A precise built-in adjustment mechanism allows to accurately meet the Scheimpflug condition and to image tilted planes in good (e.g., perfect) focus. This lens offers a wide range of magnifications and view angles. Image sharpness is maintained even when the lens is tilted by a wide angle, since the Scheimpflug adjustment tilts around the horizontal axis of the detector plane. It is possible to adjust the tilt angle as well as the focus of this objective tilt, which offers several analysis possibilities. For illustration, the tilt objective MCSM1-01X from Stemmer Imaging can be used.

Positioning of the video camera 7.3 assembled with a tilted objective 7.4 with respect to the laser 7.2 or light sheet affects the capability of obtaining proper images of the illuminated particles. To avoid blind spots, the camera is positioned at an angle 7.31 to a center axis of the laser light sheet. The adjustment of the angle 7.31 of the tilted lens is then performed, during calibration, so as to obtain a sharp image of the area illuminated by the laser light sheet. The angle 7.31 can have different values allowing several angles of view. An optimization can therefore be performed to define its value offering the best image quality of the detected particles. A distance 7.32 of the camera 7.3 from the sample as well as the height between the camera and the sample are set such that the whole area of the sample illuminated by the laser light sheet is present on the image acquired by the video camera 7.3. The focusing of the tilt objective 7.4 can be ensured by means of an adjustment ring.

Figure 8 shows an image 8 recorded by the video camera 6.6, 7.3. As can be seen in Figure 7 and Figure 8, the video camera 7.3 is positioned so that the entrance 8.1 of the laser light sheet 6.3 in the liquid is on the right side of the image 8 captured by the camera. However the video camera can also be positioned so that the entrance 8.1 of the light sheet is in the left part of the image. Both configurations were tested, and it was concluded that the configuration shown in Figure 7 is the one that allows a proper illumination of the sample while mitigating the reflections of the laser light sheet into the sample container.

The video camera 6.6, 7.3 and the tilt objective 6.7, 7.4 that are fastened to each other are mounted on the rotating mechanical structure 6.8, allowing to lock their relative orientation, their distance as well as their height in respect to the medical container 6.1, 7.1 and the laser light sheet. The only motion of the video camera and the tilt objective is effected by the rotating mechanical structure 6.8 allowing the acquisition of images of the complete sample.

To scan the entire sample volume, a motorized rotating mechanical system 6.8 may be used on which the imaging optics can be mounted. This system is represented in Figure 6 by a disk placed underneath the set-up. Its axis of rotation is coaxial with the symmetry axis of the stationary sample that is positioned along axis 6.11. The system configuration takes into account the position and movements of the components of the first optical system, which may be an imaging system. Any combination of structure and motorized mechanical axis can be used that allows the mounting of the imaging system and its automated rotation. This structure is attached to a fixed base (serving as frame) which can be mounted on a laboratory table for example. One implementation uses a circular optical table 12.1 (Figure 12) with a diameter large enough to allow the fixation of the components of the visual imaging system 6 and its rotation by a motorized rotary table 12.2. The laser 6.3 generating the light sheet, the laser apertures 6.4.1, 6.4.2, the laser trap 6.5, the camera 6.6 mounted with the tilt objective 6.7 as well as the Raman video probe 12.6 are mounted on this circular optical table 12.1 (Figure 12).

Figure 8 shows an example of an image 8 acquired by the inspection system 6. This image was acquired with a high enough exposure time to allow full visualization of 6.1 the sample. The shape of the container can be easily recognized as well as the entrance 8.1 and exit 8.2 of the light sheet through the medical container. The inner and outer wall of the container reflect light which allows to recognize them easily and to use them as reference to define an area of interest 8.3 of the raw image. In a second step, these boundaries can even be used for the implementation of a mask based on an imaging algorithm allowing the cropping of the area of interest 8.3 and get rid of the rest of the image. On this image, a particle 8.4 located in the beam of the light sheet can be seen. The light reflected by this particle is so intense that it offers a strong contrast with the rest of the sample. The quality of the raw images is high enough to be processed with imaging processing algorithms allowing the automated detection of particles present in the sample. The processing can be done by an evaluation circuit, which may be implemented by a computer programmed to process the image data.

To perform a complete inspection of the sample, it is necessary to rotate the laser light sheet and the video camera around the static medical container. This process allows the entire sample to be scanned. Small particles will only be captured in a small number of frames while larger particles may be captured in several frames.

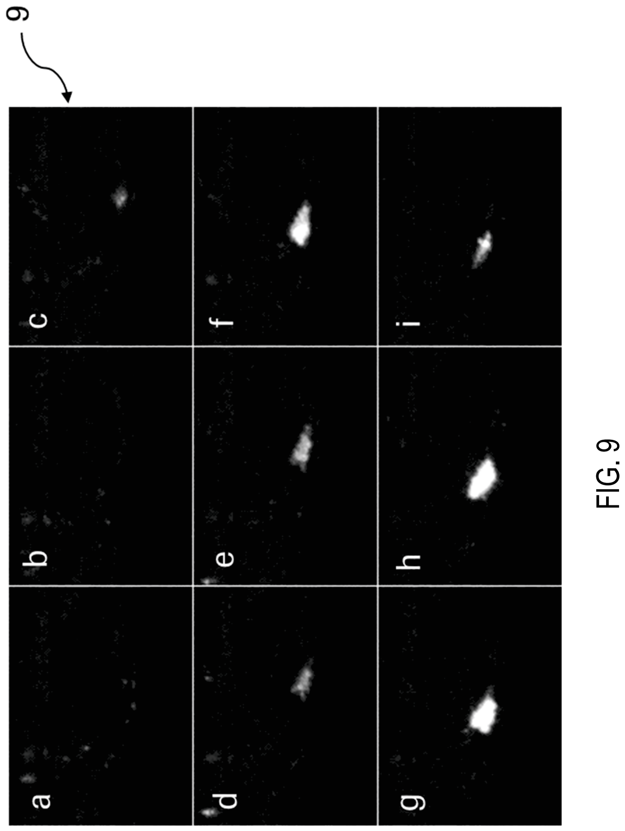

Figure 9 shows an example (on an enlarged scale) of a portion of an image providing an overview of nine images a-i acquired one after the other after completing nine consecutive increments. From frame a to frame c, despite the rotation of the imaging system, the particle is not yet within the width of the light sheet and no light is reflected. In frames d and e, the intensity of the first pixels starts to increase which indicates that a particle is close to the light sheet. On frame f, a very bright part is visible indicating that part of a particle is in the light sheet (as well as in the focal plane of the camera). On images g and h, the particle (which is larger than the width of the light sheet, even after the rotation of the imaging system) is located in the width of the light sheet, resulting in the appearance of many high brightness pixels. On image i, the light sheet has passed beyond most of the particle and only a few pixels remain bright, indicating reflection by the part of the particle still overlapping with the light sheet.

A preliminary correction of the raw images can be applied to correct the possible variations linked to the random positioning of the particles inside the sample. A treatment of the raw images by imaging processing algorithms can be used to perform the detection, characterization and 3D localization of the particles. As the captured particles are reflected on several frames, 3D clustering algorithms can be used. For example a DBScan algorithm using the pixel intensity value and the 3D particle volume can be applied. Such an algorithm can work on the basis of three parameters to be optimized:
- Image threshold: intensity that a pixel has to have to be considered as belonging to a particle
- Epsilon: distance in 3D in pixels between pixel that are over threshold to be considered to be part of the same particle
- Min neighbors: minimum size of pixel within a cluster (in 3D). (Value is in pixels)

In addition, the slicing of the entire volume of the sample by the inspection system 6 offers the possibility to perform a 3D reconstruction of the detected particle(s).

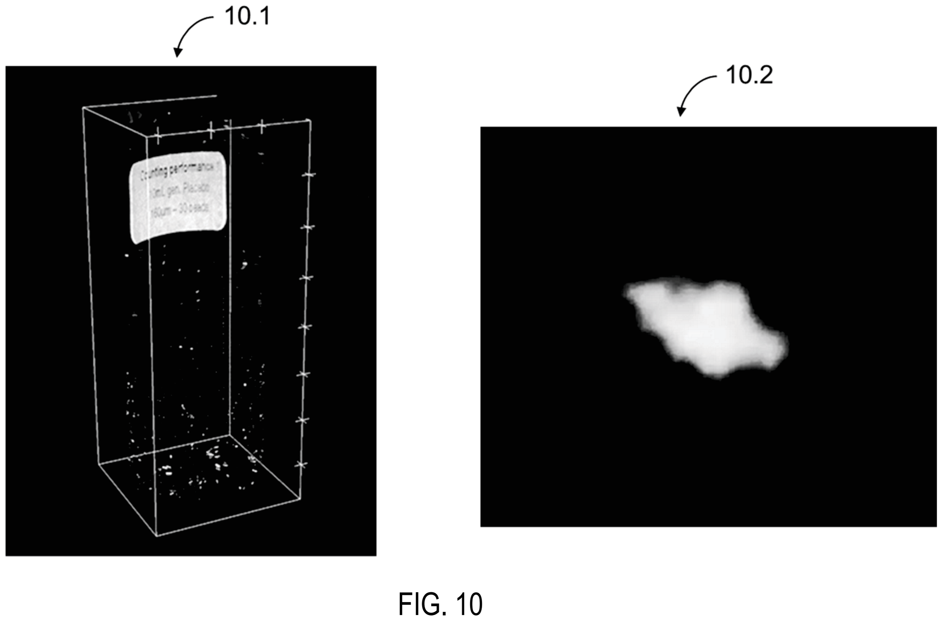

Figure 10 provides an example of 3D reconstructions of a complete sample as 10.1 and a reconstruction 10.2 of one single particle shown in Figure 9. The 3D imaging of particles in a closed container allows a more advanced characterization by offering a 3D visualization of the morphology and as well as a 3D sizing. Moreover, a more precise localization of the particle center can be achieved.

The integration of a Raman probe to the inspection system allows the chemical characterization (e.g., an identification based on spectroscopic fingerprinting) of the detected visible particles to be performed. The probe configuration (as described with reference to Figure 4, for example) allows the source of the Raman probe beam and the Raman detector to be moved in 3D around the sample and to adjust its position according to the position of the particles (which remain stationary during the acquisition). The size and weight of the probe are implemented so as to ensure adequate motorization and integration into the inspection system. The addition of a light unit and a video camera into a compact Raman probe can be considered to illuminate the sampling area, which would allow visualizing the particle to be identified to obtain an image and to facilitate the focus.

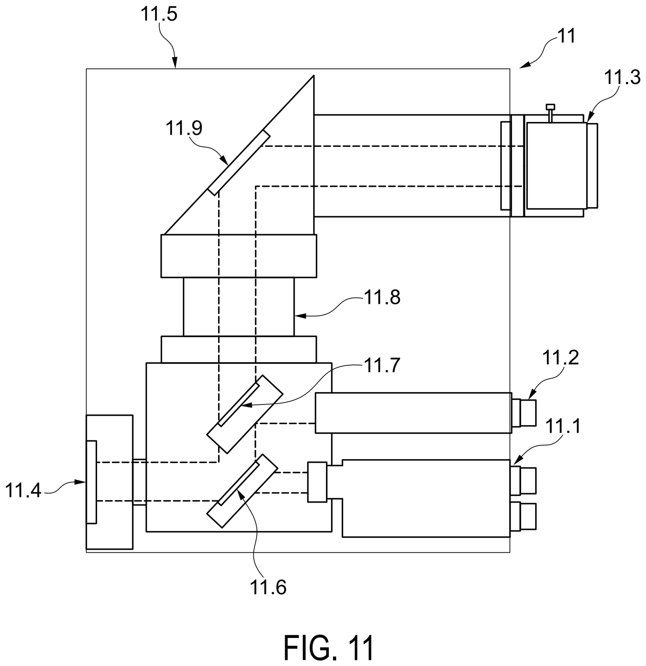

Figure 11 is a representation of a probe 11 that comprises a Raman probe, a light unit and a video camera. This probe 11 is designed to offer good capabilities while maintaining flexibility in the choice of camera and objective to be used. The probe 11 is operative or configured to perform in-situ Raman spectroscopic analysis of visible particles present in a liquid filled container, collecting high-resolution particles images and Raman spectra.

The probe 11 comprises a Raman probe 11.1. The Raman probe 11.1 is connected to a spectrometer (not shown in figure 11) using two optical fibers, one allowing the excitation of the sampling area and the other the collection of the Raman backscattered light. The selection inner diameters for these optical fibers are selected based on a desired excitation spot size and collection volume. Moreover, the measurement settings of the spectrometer are set so as to allow a good identification of the detected particles without damaging the particle and without damaging the formulation in the container. A powerful laser exposure for a long time can result in damage on the sample area. On the other hand, a too low power and exposure would not allow scattering and therefore no identification.

The excitation wavelength has an impact on the Raman intensity, spatial resolution, background fluorescence and acquisition time. The situation of the sample to be identified and the surrounding environment are taken into consideration. First, the particles may be made of different materials that could be sensitive to different excitation wavelengths. Second, the laser must pass through several mediums. A wavelength that minimizes the appearance of data from the container or the solution in the container will be preferred. The use of a 785 nm wavelength offers a good compromise between Raman scattering intensity and fluorescence suppression for various use cases. A second Raman probe with another wavelength can be provided to offer more flexibility to the system.

The addition of an illumination feature is achieved through the presence of an optical fiber lens collimator 11.2 connected to a light source (not shown in Figure 11). The illumination of the sample area makes it easier to visualize the detected particles and to focus on them. The use of additional optical components allows using the same optical path as the Raman probe.

The integration of a video camera on this probe 11 offers a visualization capacity on the sampling area. This integration is made possible by the use of a camera mount with external C-mount thread 11.3. The acquired image allows the calibration of the probe placement which is done thanks to the 3D localization data of the particles collected by the visual inspection system 6. Moreover this acquired image is used as a read-out to check the accuracy of the probe positioning. Additional optical components allow the visualization through the same optical path. It is also possible to have a visualization of the laser beam on the particle during the measurement which ensures the reliability of the acquired data. In case of slightly moving particles, the images acquired can be used for tracking and correcting the position of the probe 11 in real time to keep the particle in the focal plane of the probe 11 during the data acquisition.

At the optical output of this probe 11 is an objective lens mount 11.4 allowing the attachment of conventional microscope objectives. The characteristics of the sample as well as the type of data acquired by this probe are considered for choosing the microscope objective. Moreover, to reach all the particles, a working distance is maintained greater than the radius of the largest container since the particles can be located at any point inside the closed container. The numerical aperture is made large (e.g., maximized) in order to maximize the Raman backlight scattered collection. A corrected near infrared (NIR) objective can also be used.

The medical containers to be analyzed, which are mainly cylindrical in shape and filled with liquid, act as a lens. A compensating lens is inserted between the sample and the microscope objective of the compact probe 11 to compensate for light distortion and obtain a sharp image. The shape and material used to make this probe is dependent on the characteristics of the sample (liquid solution and container in which the liquid solution is contained). Corrective lenses dedicated to a particular container type and/or size (e.g., diameter) can be used.

The probe 11 has an enclosure 11.5 to hold the different components of the probe in position and maintain the integrity of the optical components. The placement and configuration of components can be implemented so as to result in a compact design and light weight to facilitate its integration into the inspection system while affording ease of positioning.

At least parts of the beam path can be shared by various components, such as the video camera and the Raman probe 11.4 integrated into the probe 11. Various optical components may be provided in the probe 11. These optical components may include reflectors (such as a mirror 11.9), focusing, collimating, or other beam conditioning components such as a tube lens 11.8, components that provide beam splitting and/or interference setups, such as a beam splitter 11.7 (which may have 80% transmission and 20% reflection, without being limited thereto), and a dichroic filter 11.6.

The visual imaging system 6 performs the detection and 3D localization of particles present in a closed container filled with liquid. These particles can be in any position inside the closed container. An automated mechanical or robotic system is used to allow the movement of the probe 11 around the sample. To minimize the optical effects created by the cylindrical shape of the container, the probe 11 is aimed at the symmetry axis of the sample which is aligned with an axis 6.11 by the sample holder. The mechanical structure or automated robotic actuator can offer at least three degrees of movement to the probe 11 to allow focusing in the whole sample. The actuator arrangement used for displacing the probe 11 may provide a first degree of freedom allowing a rotary movement around the sample while keeping its aim towards the axis 6.11 along which the symmetry axis of the container is positioned. The actuator arrangement used for displacing the probe 11 may provide a second and third degree of freedom that allow the inspection system 6 to adapt its height 5.41 (same direction as the symmetry axis) as well as its distance to the inside of the sample 5.42 (direction perpendicular to that of the symmetry axis). It is also possible to consider adding an additional degree of rotation allowing the probe to tilt up or down in case some particles float on the surface of the liquid or are at the bottom of the sample.

In one embodiment, the probe 11 is mounted on the circular motorized structure 6.8, 12.2 which rotates the visual imaging set-up. This reduces the number of motorized axes and facilitates the calibration between the two optical systems since they are mounted on the same moving structure 6.8, 12.2. The addition of two motorized linear axis allowing, for the first one, to vary the height of the probe 11 over an amplitude large enough to cover the large samples and for the second one to vary its focus over an amplitude of at least the radius of the largest sample. An additional rotary axis allowing the tilt of the probe can be integrated in the motorized structure. This complete motorized structure 12.5 holding and motorizing the compact probe 11 is shown in Figure 12.

Figure 12 shows a perspective view of an inspection system 12 which comprises a sample holder 12.1 to position a medical container in an immobile manner during data acquisition, a first light source 12.3 that outputs a light sheet, a first detector 12.4 that detects an image of the container illuminated with the light sheet, and a probe 12.5 operative for performing data acquisition for Raman spectroscopy. The first light source 12.3, the first detector 12.4, and the probe 12.5 are mounted on a rotatable support 12.2. An opening in the center of this support 12.2 allows the fixation of the sample holder 12.1 and its vertical movement. This optical table may have a set of threaded holes that are placed like a grid to allow a simplified fixation of the components of the system. A shaft 12.7, which may be a hollow tube through which a fixation of the sample holder 12.1 passes, may be used to fix this optical table on a motorized rotary table driven by a motor 12.6. The inner diameter of this tube must be large enough to allow the passage of the fixation of the sample holder and long enough to allow the implementation of a rotating cable protection system. In on embodiment, the motorized rotary table DMT 200N-D90-HiDS from Owis is implemented offering a very precise rotary positioning without angle limitation.

The probe 12.5 can be installed in several positions on the support 12.2 so that the probe 12.5 does not disturb the visual imaging set-up. Placement of the probe 12.5 out of the illumination created by the laser 12.3 is preferred to avoid creating additional reflections. The probe 12.5 is positioned so as to ensure that there is no obstruction of the camera 12.4. Furthermore, it is preferable to install the probe 12.5 close enough to the sample so that its movement towards a detected particle requires as little time as possible.

In one embodiment, the probe 12.5 and its actuator (also referred to as second actuator) can be mounted as close as possible to the area of interest 8.3 visualized by the camera 12.4 avoiding any interference on the visual inspection set-up. Knowing that the rotating table 12.1 rotates clockwise, the positioning of the probe 12.5 and its motorized structure as shown in Figure 12 allows the probe to be targeted as quickly as possible (rotation of the smallest possible angle) on the inspected area. The lateral position of the probe 12.5 in relation to the sample is then defined by the amplitude of the motorized axis allowing to focus the compact probe 12.5 at least until the middle of the container.

In one embodiment, the sample holder 12.1 and the sample are placed in the center of the system. The sample remains stationary during the entire analysis. A motorized linear axis, fixed on the frame (not shown in Figure 12), allows to adjust the vertical position of the sample holder 12.1 before the beginning of the analysis according to the fill volume of the sample. A circular support, such as optical table 12.2, is used as a base to fix the components of the visual inspection system: the laser light sheet 12.3 and the camera 12.4, as well as the compact Raman probe and its motorized structure 12.5. This optical table 12.2 is rotated around the sample 12.1 (which remains stationary) by a motorized rotating table driven by a motor 12.6, which allows the scanning of the sample and the aiming of the compact probe in a second step. The coupling between these two parts is made by a spacer tube 12.7 which is hollow and allows the passage of the motorized axis attached to the sample holder 12.1.

The symmetry axis of the sample is coaxial with the axis of rotation of the rotary table. A manual mechanical axis can be used to facilitate the placement and alignment between different components.

In the configuration shown in Figure 12, the rotation movement generated by the rotary table is in a clockwise direction. However, a counterclockwise rotation can be used. In this case, it may be preferable to reposition the probe 12.5 and its motorized structure.

The 3D particle location data detected by the visual imaging system is used to control the position of the compact Raman probe 12.5. The different elements are calibrated so as to ensure an accurate positioning.

The inspection system may comprise an electrical control cabinet (not shown in Figure 12) which provides the monitoring and powering of the various components of the inspection system 12. In addition, a control device, such as a computer running dedicated software, can be provided in the inspection system 12 to perform various tasks for the automatic control of the entire system and processing of the detector outputs.

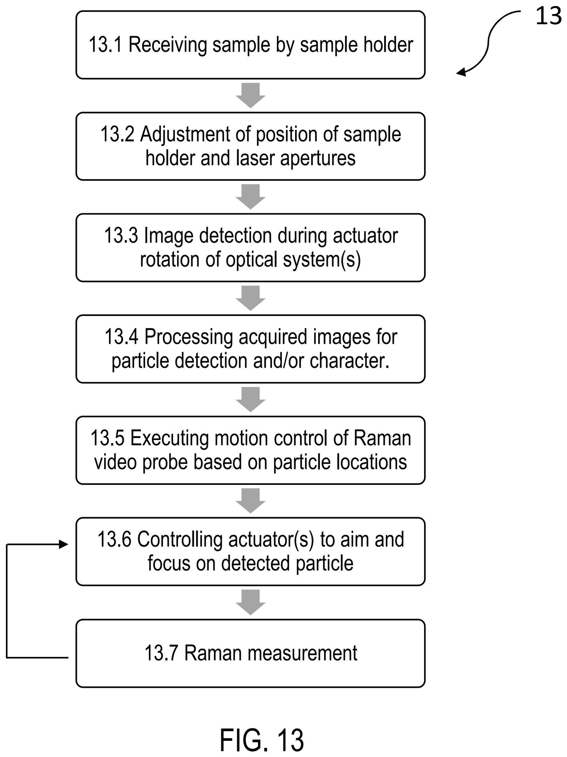

Figure 13 is a flow chart of a method 13. The method 13 may be performed automatically by an inspection system according to the invention.

At step 13.1, the sample holder receives the medical container. The sample holder positions the medical container such that its symmetry axis is aligned with and oriented along an axis. The sample holder positions the medical container and holds it in an immobile or stationary state during data acquisition for analysis.

At step 13.2, a vertical position of the sample holder and the laser apertures may be adjusted according to the configuration of the medical container. This may be done automatically responsive to detection of the container (using, e.g., a container identifier such as a bar code) or responsive to a user input that specifies the container type and/or size and/or filling level. At step 13.2, a laser light sheet can be turned on.

At step 13.3, an actuator (such as a motorized mechanical structure) starts its rotation allowing the scanning of the entire sample. Images are acquired as a function of the increment value that has been adjusted according to the sample configuration at step 13.2. A Raman probe system may remain inoperative during this scan.

At step 13.4, the images captured at step 13.3 are processed by imaging algorithms allowing the detection, characterization and/or 3D localization of particles present in the sample, if any.

At step 13.5, the 3D localization data are processed by a control unit to execute the motion control of the Raman video probe.

At step 13.3, the actuator arrangement responsible for displacing the probe with the Raman probe is controlled. This actuator arrangement may comprise the motorized mechanical structure that effects rotation of the support 12.2 and the motorized axis dedicated to the probe 12.5. The probe 12.5 is adjusted to aim and focus on the detected particle.

At step 13.7, a Raman measurement is triggered by the control unit to perform the chemical identification of the particle. An additional image may be acquired by the camera integrated in the probe.

Steps 13.6 and 13.7 are repeated for the previously identified particles in the medical container.

The processing of the visual image data captured responsive to illumination of the medical container with a light sheet and/or of the spectroscopic data (such as the Raman spectrum) may use an artificial intelligence (AI) model. The Al model may be trained on impurities of known characteristics (such as sizes and/or chemical characteristics), preferably for containers of various types (vial, syringe, or other), walls (glass or plastic), and liquids. Supervised learning may be used, with the parameters of the Al model being adjusted using techniques such as gradient descent.

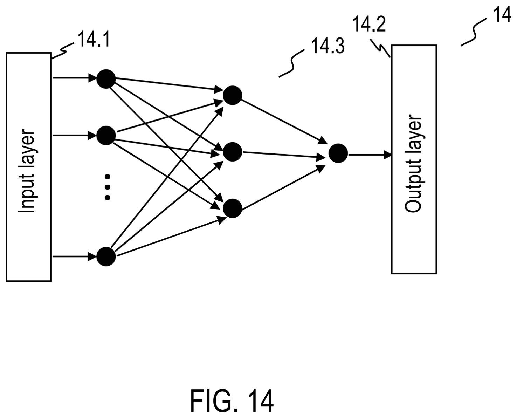

Figure 14 shows an example of an Al model 14 that, after training, may be executed by a computer of the inspection system for processing acquired data. The Al model 14 comprises an input layer 14.1 operative or configured to receive pixel values or quantities derived therefrom (such as particle size data or portions of a spectrum). The Al model 14 comprises an output layer 14.2. The output layer 14.2 may output a binary output indicating whether or not the particle renders the medical container unacceptable. The output layer 14.2 may output an output that indicates which type of particle is present. The Al model 14 may, thus, operate as a classifier that processes information obtained using the optical system(s) of the inspection system into information on the particles. The Al model 14 may comprise hidden layers 14.3, which may comprise convolutional layers, recurrent layers, or other artificial neural network (ANN) configurations.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative or exemplary and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below. For example, it is possible to operate the invention in an embodiment wherein:
- the medical container is not closed and contains a lyophilized product;
- the inspection system includes more than one visual imaging system, with each of the visual imaging systems using a light sheet;
- the inspection system includes more than one spectroscopic system.

The disclosure also covers all further features shown in the Figures. individually although they may not have been described in the afore or following description. Also, single alternatives of the embodiments described in the figures and the description and single alternatives of features thereof can be disclaimed from the subject matter of the invention or from disclosed subject matter. The disclosure comprises subject matter consisting of the features defined in the claims or the exemplary embodiments as well as subject matter comprising said features.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Furthermore, a computer program can also be a data structure product or a signal for embodying a specific method such as the method according to the invention.

## Claims

1. An inspection system (1.3; 12) operative to inspect a closed medical container containing a liquid, the inspection system (1.3; 12) comprising:
a sample holder (1.4; 2.1; 12.1) operative to hold the closed medical container;
and
a light source (11) operative to output a Raman probe beam incident onto the closed medical container;
**characterized by**:
a detector (11) operative to detect a Raman spectrum responsive to outputting the Raman probe beam; and
an evaluation system (1.7) coupled to the detector and operative to determine characteristics of a particle in the closed medical container based at least on the Raman spectrum.

2. The inspection system (1.3; 12) of claim 1, further comprising an actuator arrangement having at least two, in particular three or more, degrees of freedom, operative to position the light source and/or the detector relative to the sample holder.

3. The inspection system (1.3; 12) of claim 2, wherein the actuator arrangement comprises
a 3-axis robotic arm; or
a multi-axis linear displacement actuator; or
a first actuator operative or configured to rotate a support on which the light source and the detector are mounted, and preferably a second actuator operative or configured to displace the light source and/or the detector relative to the support along at least two axes.

4. The inspection system (1.3; 12) of any one of the preceding claims, wherein the sample holder is operative to position the closed medical container so that closed medical container is immobile while the Raman spectrum is measured.

5. The inspection system (1.3; 12) of any one of the preceding claims, further comprising an optical imaging system operative or configured to localize particles in an interior of the closed medical container that also contains the liquid.

6. The inspection system (1.3; 12) of claim 5, wherein the optical imaging system comprises a tilted objective.

7. The inspection system (1.3; 12) of any one of the preceding claims, wherein the evaluation system is operative or configured to determine chemical characteristics of the particle based at least on a detector output provided by the detector or a Raman spectrum provided by a Raman spectrometer the detector is couplable to.

8. The inspection system (1.3; 12) of any one of the preceding claims, being operative for inspecting medical container selected from a group comprising or consisting of vials and syringes.

9. A manufacturing system (1), comprising:
a filling device (1.1) operative to fill at least one liquid into a medical container;
a closure device (1.2) operative to close the medical container with the at least one liquid contained therein; and
an inspection system (1.3; 12) according to any one of the preceding claims operative to inspect the closed medical container for particulate matter.

10. The manufacturing system (1) of claim 9, further comprising a formulation preparation system operative or configured to prepare the at least one liquid.

11. The manufacturing system (1) of claim 9 or claim 10, further comprising a process control system operative or configured to control at least one of the filling, closing, and, if present, formulation preparation system, wherein preferably the process control system has an input interface coupled to a quality monitoring system and is operative or configured to control operation of at least one of the filling, closing, and, if present, formulation preparation system responsive to an output of the quality monitoring system.

12. The manufacturing system (1) of any one of claims 9 to 11, further comprising a discarding station operative or configured to selectively discard the medical container if the inspection system determines that it contains at least one particle in its interior and the at least one particle is non-acceptable, based on the particle characteristics determined by the inspection system.

13. An inspection method of inspecting a closed medical container containing a liquid, the inspection method comprising:
positioning, by a sample holder (1.4; 2.1; 12.1), the closed medical container;
irradiating, by a light source, the closed medical container with a Raman probe beam;
**characterized by**:
detecting, using a Raman spectrometer, a Raman spectrum responsive to irradiating the closed medical container with the Raman probe beam; and
determining characteristics of a particle in the closed medical container based at least on the Raman spectrum.

14. The inspection method of claim 13, which is performed by an inspection system (1.3; 12) according to any one of claims 1 to 8 or a manufacturing system according to any one of claims 9 to 12.

15. A manufacturing method, comprising:
filling a liquid into a medical container;
closing the medical container with the liquid contained therein; and
performing an inspection method according to any one of claims 13 to 14 to inspect the closed medical container for particulate matter.
